# EUROPEAN PATENT SPECIFICATION

(11) **EP 3 410 210 B1**
(45) Date of publication and mention of the grant of the patent: **21.10.2020**
(21) Application number: 17744436.1
(22) Date of filing: 27.01.2017
(51) Int. Cl.: G03F 7/039, G03F 7/00, G03F 7/004, G03F 7/095, G03F 7/32, G03F 7/40, C08G 18/38

(54) **POSITIVE LITHOGRAPHIC PRINTING MASTER PLATE AND METHOD FOR MANUFACTURING LITHOGRAPHIC PRINTING PLATE**
POSITIVE LITHOGRAFISCHE ORIGINALDRUCKPLATTE UND VERFAHREN ZUR HERSTELLUNG EINER LITHOGRAFISCHEN DRUCKPLATTE
PLAQUE ORIGINALE D'IMPRESSION LITHOGRAPHIQUE DE TYPE POSITIF, ET PROCÉDÉ DE FABRICATION DE PLAQUE D'IMPRESSION LITHOGRAPHIQUE

(30) Priority: 29.01.2016 JP 2016015639
(43) Date of publication of application: 05.12.2018
(73) Proprietor: FUJIFILM Corporation, Tokyo 106-8620 (JP)
(72) Inventor: SATO, Takashi, Haibara-gun Shizuoka 421-0396 (JP)
(74) Representative: Hoffmann Eitle
(86) International application number: PCT/JP2017/003056
(87) International publication number: WO 2017/131206

(56) References cited:
- EP-A1- 0 589 309
- EP-A1- 1 577 111
- JP-A- H06 282 067
- JP-A- 2001 066 768
- JP-A- 2003 295 417
- JP-A- 2004 252 038
- JP-A- 2011 197 308
- US-A- 4 387 152

## Description

### BACKGROUND OF THE INVENTION

### 1. Field of the Invention

The present invention relates to a positive type planographic printing plate precursor and a method of producing a planographic printing plate.

### 2. Description of the Related Art

In the related art, various photosensitive compositions have been used as materials for forming visible images or materials for planographic printing plates. Particularly, in recent years in the field of planographic printing, lasers have been remarkably developed, and in particular, solid-state lasers and semiconductor lasers having an emission region in a near infrared region to an infrared region, with a high output and a small size, have become easily available. In the field of planographic printing, as an exposure light source when manufacturing a printing plate directly from digital data from a computer or the like, these lasers are very useful.

A positive type planographic printing plate precursor for infrared laser has an alkali-soluble binder resin and an infrared absorbing dye (IR dye) which absorbs light and generates heat, as essential components. In the unexposed portion (image area), this IR dye and the like act as a development restrainer which substantially decreases the solubility of a binder resin in a developer due to an interaction with the binder resin, and in the exposed portion (non-image area), the interaction between the IR dye and the like and the binder resin weakens due to generated heat, the infrared absorbent and the like dissolve in an alkaline developer, and as a result, a planographic printing plate is formed.

### SUMMARY OF THE INVENTION

In a positive type planographic printing plate, high printing durability is obtained in some cases by performing a high-temperature heat treatment (so-called burning treatment) after exposure and development.

The present inventors found that planographic printing plate precursors which have been used in the related art have the following problems.

It has been known that a printing plate having excellent printing durability is obtained by using a urea polymer having a urea bond in the main chain or a urethane polymer having a urethane bond in the main chain, as a binder resin (for example, see WO2015/151632A, and WO2015/152209A). However, in a case where the burning treatment is performed for the purpose of further improving the chemical resistance and the printing durability of the printing plate obtained by using a urea polymer or a urethane polymer, the polymer is decomposed due to heat and the printing durability and the chemical resistance are degraded in some cases.

For example, a technique of using a novolac resin as a main binder (for example, see JP2001-66768A) has been suggested as a technique for improving the printing durability and the chemical resistance through a burning treatment of the related art. In this manner, improvement of the printing durability is realized by performing the burning treatment.

However, there is a problem in that the chemical resistance of this image recording layer deteriorates.

Further, a method of using a modified phenol resin (for example, see JP2005-215651A) and the like have been known, but the effects have been insufficient in a case where such a method is applied to a printing plate mainly containing a binder resin with low heat resistance.

EP0589309 A1, JP2001066768 A and US4387152 A disclose a lithographic printing plate having a phenol derivative in the photosensitive layer. EP1577111 A1, JP2003295417 A and JP2011197308 A disclose a lithographic printing plate containing a polyurethane or polyurea resin the photosensitive layer.

An object of an embodiment of the present invention is to provide a positive type planographic printing plate precursor which has excellent chemical resistance and whose printing durability is improved before and after a burning treatment; and a method of producing a planographic printing plate obtained by using the positive type planographic printing plate precursor.

Specific means for solving the above-described problems includes the following aspects.
<1> A positive type planographic printing plate precursor, including:
   a support; and
   an image recording layer provided on the support,
   in which the image recording layer contains: a phenol compound containing a phenolic hydroxyl group and a substituent A represented by -CH₂OR in a molecule thereof, and having a molecular weight of from 200 to 2,000; a polymer comprising at least one bond selected from the group of a urea bond and a urethane bond in a main chain thereof; and an infrared absorbent; and
   in which R represents a hydrogen atom, an alkyl group, or an acyl group, and in a case where a plurality of the substituents A are present, a plurality of R's may be the same as or different from each other, as claimed in claim 1.

Embodiments of this printing plate precursor are derivable from claims 2-12.

(13) A method of producing a planographic printing plate, including, in the following order:
subjecting the positive type planographic printing plate precursor to image-wise light exposure and subjecting the positive type planographic printing plate precursor after the light exposure to development using an alkali aqueous solution having a pH of 8.5 to 13.5.

(14) The method of producing a planographic printing plate according to . (13), further comprising, after the development, a heat treatment step of heating the positive type planographic printing plate precursor at 150°C to 350°C.

According to an embodiment of the present invention, it is possible to provide a positive type planographic printing plate precursor which has excellent chemical resistance and whose printing durability is improved before and after a burning treatment; and a method of producing a planographic printing plate obtained by using the positive type planographic printing plate precursor.

### DESCRIPTION OF THE PREFERRED EMBODIMENTS

Hereinafter, the content of the present invention will be described in detail. The description of the constitutive elements as described below is based on representative embodiments of the present invention, but the present invention is not limited to such embodiments.

Moreover, in the present specification, the numerical ranges shown using "to" indicate ranges including the numerical values described before and after "to" as the lower limits and the upper limits.

Regarding the description of a group (atomic group) in the present specification, when the description does not indicate whether a group is substituted or unsubstituted, the description includes both a group having a substituent and a group not having a substituent. For example, "alkyl group" includes not only an alkyl group (an unsubstituted alkyl group) which does not have a substituent, but also an alkyl group (a substituted alkyl group) which has a substituent.

In the present specification, "% by mass" has the same meaning as "% by weight" and "part(s) by mass" has the same meaning as "part(s) by weight".

Further, in the present specification, a combination of preferred aspects is a more preferred aspect.

### (Positive type planographic printing plate precursor)

A positive type planographic printing plate precursor according to the present disclosure includes: a support; and an image recording layer which is provided on the support and contains a phenol compound containing a phenolic hydroxyl group and a substituent represented by -CH₂OR in a molecule and having a molecular weight of 200 to 2000, a polymer having any one or both of a urea bond and a urethane bond in a main chain, and an infrared absorbent.

R represents a hydrogen atom, an alkyl group, or an acyl group, and in a case where a plurality of the substituents are present, a plurality of R's may be the same as or different from each other.

The mechanism for exhibiting the effects according to an embodiment of the present invention is not clear, but is presumed as follows. It is considered that a urea polymer or a urethane polymer is decomposed to a state in which the molecular weight or the weight-average molecular weight is several hundreds to several thousands by performing the burning treatment. Consequently, this decomposition is assumed to result in deterioration of the printing durability and the chemical resistance compared to before the burning treatment. At this time, the terminal of an oligomer or a monomer which is a decomposition product is considered to contain an isocyanate group.

In the positive type planographic printing plate precursor according to the present disclosure, three-dimensional crosslinking is considered to be formed by reacting a phenolic hydroxyl group in the phenol compound with a terminal isocyanate group that is generated from the decomposition of one or both of a urea bond and a urethane bond included in a polymer having one or both of a urea bond and a urethane bond in the main chain, during the burning treatment. This is an effect specular to a urea polymer or a urethane polymer that generates a decomposition product containing an isocyanate group at the terminal during heating and is a phenomenon that does not occur in other kinds of polymers that do not generate an isocyanate group.

Further, three-dimensional crosslinking resulting from condensation of substituents represented by -CH₂OR is considered to be formed in the phenol compound which contains a phenolic hydroxyl group and a substituent represented by -CH₂OR in a molecule and has a molecular weight of 200 to 2000. Particularly, the effects of the present invention are considered to be greater since the product resulting from repolymerization can have a three-dimensional network structure in a case where the phenol compound contains three or more substituents represented by -CH₂OR in one molecule.

Further, according to the embodiment of the present disclosure, it was found that the resistance to higher ultraviolet (UV) ink printing or the chemical resistance (also simply referred to as "chemical resistance" or "cleaner resistance") to a plate cleaner or the like used during printing is exhibited even in a case where the burning treatment is not performed. This mechanism for exhibiting the effect is also unclear, but it is assumed that the polarity of the image recording layer becomes greater through the addition of the phenol compound.

Hereinafter, each component contained in the image recording layer of the positive type planographic printing plate precursor according to the present disclosure will be described.

### <Phenol compound that contains phenolic hydroxyl group and substituent represented by -CH₂OR in molecule and has molecular weight of 200 to 2000>

The image recording layer according to the present disclosure contains a phenol compound containing a phenolic hydroxyl group and a substituent represented by -CH₂OR in a molecule and having a molecular weight of 200 to 2000.

R in the substituent represents a hydrogen atom, an alkyl group, or an acyl group, and in a case where a plurality of the substituents are present, a plurality of R's may be the same as or different from each other.

R represents preferably a hydrogen atom, an alkyl group having 1 to 4 carbon atoms, or an acyl group having 1 to 4 carbon atoms and more preferably a hydrogen atom, an alkyl group having 1 or 2 carbon atoms, or an acyl group having 2 or 3 carbon atoms.

It is preferable that the substituent is present on an aromatic ring containing the phenolic hydroxyl group.

It is preferable that the phenol compound contains three or more substituents, in which R represents a hydrogen atom, in one molecule or six or more substituents, in which R represents an alkyl group, in one molecule; more preferable that the phenol compound contains six or more substituents, in which R represents a hydrogen atom, in one molecule or six or more substituents, in which R represents an alkyl group, in one molecule; and still more preferable that the phenol compound contains six or more substituents, in which R represents a hydrogen atom, in one molecule.

The molecular weight of the phenol compound is in a range of 200 to 2000, preferably in a range of 250 to 1500, and more preferably in a range of 300 to 1000.

In a case where the molecular weight is in the above-described range, a positive type planographic printing plate precursor which enables production of a planographic printing plate with excellent printing durability and excellent chemical resistance is obtained.

In the present disclosure, the molecular weight of the phenol compound indicates the weight-average molecular weight in a case where the phenol compound has a molecular weight distribution.

The molecular weight of the phenol compound is set to be measured by known mass spectrometry in the case where the phenol compound has a molecular weight distribution.

In the case where the phenol compound has a molecular weight distribution, the molecular weight (weight-average molecular weight) of the phenol compound indicates the weight-average molecular weight in terms of polystyrene to be measured by gel permeation chromatography (GPC) in a case where tetrahydrofuran (THF) is used as a solvent.

Further, the weight-average molecular weight of a polymer component in the present disclosure is measured according to the above-described method unless otherwise noted.

The phenol compound has preferably a structure represented by Formula 1, more preferably a structure represented by Formula 2, and still more preferably a structure represented by Formula 3.

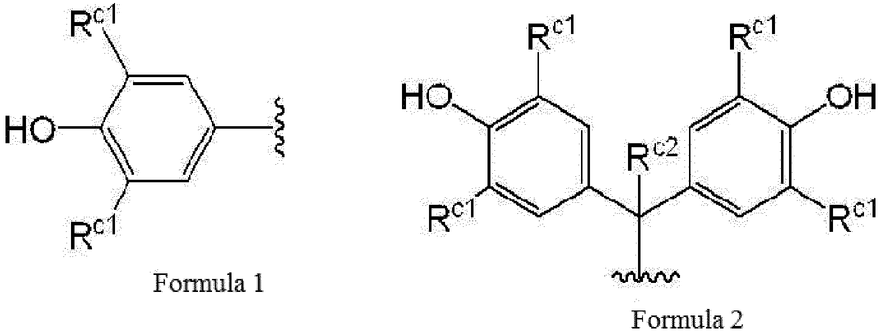

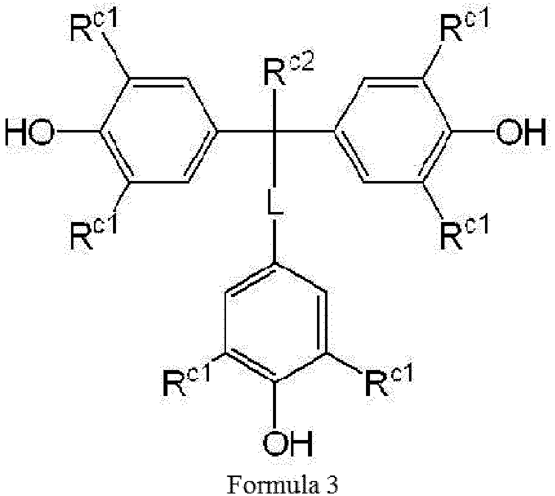

In Formulae 1 to 3, R^{c1} represents the substituent represented by -CH₂OR, R^{c2} represents a hydrogen atom or an alkyl group, L represents an alkylene group, an arylene group, or a group represented by any of these bonds, and a wavy line part represents a linking position with another structure.

The "substituent represented by -CH₂OR" as R^{c1} corresponds to the "substituent represented by -CH₂OR" contained in the image recording layer according to the present disclosure. Accordingly, R in the "substituent represented by -CH₂OR" has the same definition as R in the "substituent represented by -CH₂OR" contained in the image recording layer, and the preferred aspects are the same as those described above.

R^{c2} represents preferably a hydrogen atom or an alkyl group having 1 to 4 carbon atoms, more preferably a hydrogen atom or a methyl group, and still more preferably a methyl group.

L represents preferably an alkylene group having 1 to 8 carbon atoms, an arylene group having 6 to 10 carbon atoms, or a group represented by any of these bonds, more preferably an alkylene group having 1 to 4 carbon atoms, a phenylene group, or a group represented by any of these bonds, and still more preferably an alkylene group having 1 to 4 carbon atoms or a group represented by a bond of a phenylene group. The alkylene group may be linear, branched, or cyclic.

In the present disclosure, the phenol compound which contains a phenolic hydroxyl group and a substituent represented by -CH₂OR in a molecule and has a molecular weight of 200 to 2000 is obtained by reacting a phenol derivative with formaldehyde in a strong alkali in a temperature range of 10°C to 60°C for 1 to 30 hours as disclosed in JP1982-111529A (JP-S57-111529A) or JP1994-282067A (JP-H06-282067). In this manner, a compound containing an alkyl group and an acyl group in the portion of R is obtained by firstly preparing a compound that contains a -CH₂OH group as a substituent and carrying out an etherification reaction or an esterification reaction of a hydroxymethyl group by reacting the prepared compound with an alcohol or an acid.

The phenol compound which contains a phenolic hydroxyl group and a substituent represented by -CH₂OR in a molecule and has a molecular weight of 200 to 2000 has been known as an additive for a positive type photosensitive planographic printing plate that is exposed to a UV light source and contains quinone diazide as a photosensitive component in JP1982-111529A (JP-S57-111529A) or JP1994-282067A (JP-H06-282067). Further, this phenol compound has been applied for the purpose of improving the printing durability and stain resistance while the photosensitive layer is developed and then subjected to a high-temperature heat treatment, but it is disclosed that the phenol compound in which R represents a hydrogen atom is more advantageous that the phenol compound in which R represents an alkyl group or an acyl group from the viewpoint of improving the printing durability. Further, JP2001-66768A describes that the compound in which R represents a hydrogen atom and which contains a -CH₂OH group is not effective in a case where the compound is applied to an infrared sensitive planographic printing plate precursor and only the compound in which R represents an alkyl group or an acyl group exerts the effects of improving development latitude, storage stability, and ink receptivity (inking property) during printing as described above. However, in a case where the compound is applied to an infrared sensitive planographic printing plate precursor that contains a urethane polymer or a urea polymer such as the planographic printing plate precursor according to the present disclosure, the compound in which R represents a hydrogen atom unexpectedly exerts the effects of improving the printing durability during burning, and the UV ink printing durability and the cleaner resistance (chemical resistance) in a case where the burning treatment is not performed, compared to the compound in which R represents an alkyl group or an acyl group.

Hereinafter, specific examples of the phenol compound which contains a phenolic hydroxyl group and a substituent represented by -CH₂OR in a molecule and has a molecular weight of 200 to 2000, used in the present disclosure, will be described, but the present disclosure is not limited to these.

In Formulae C-1 to C-9, Me represents a methyl group, Et represents an ethyl group, and Ac represents an acetyl group. Further, the description for carbon atoms and hydrogen atoms of hydrocarbons will not be provided.

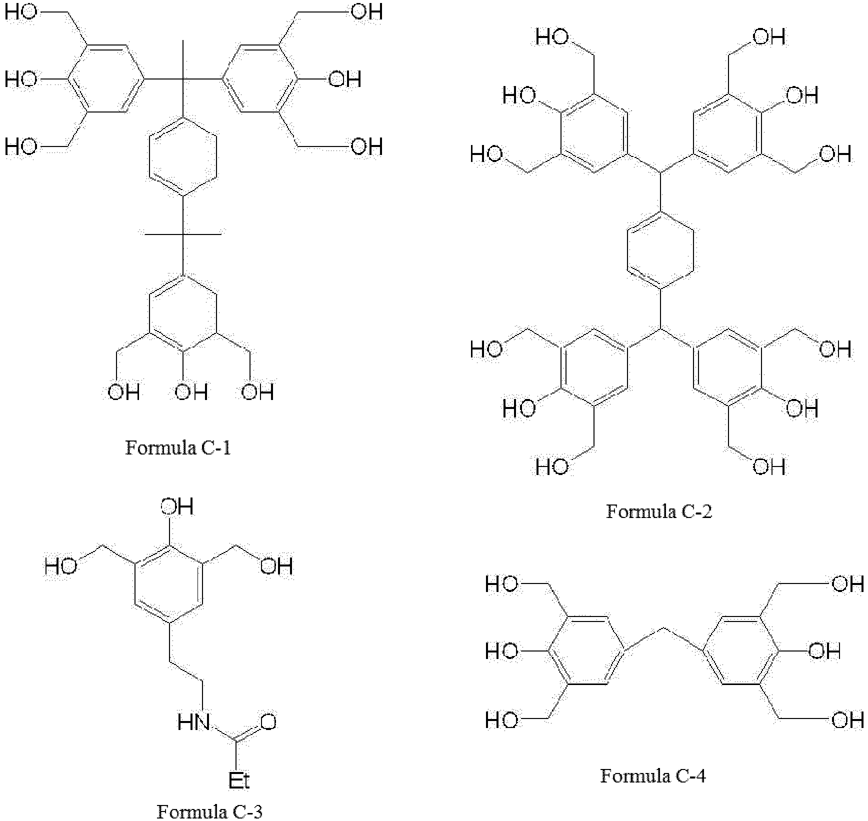

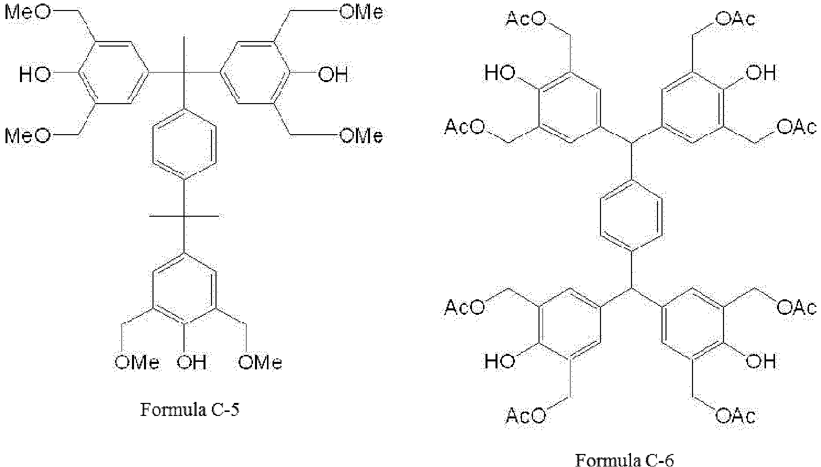

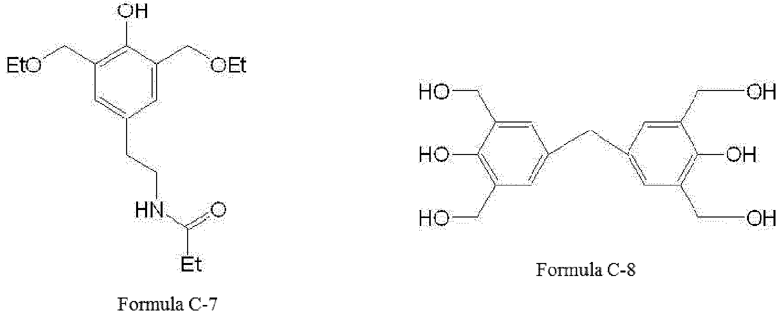

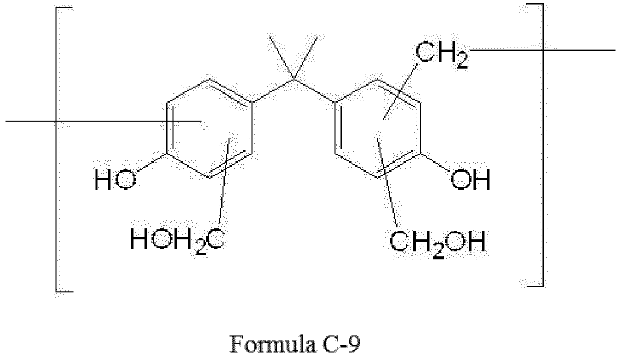

The content of the phenol compound is preferably in a range of 2% to 50% by mass and more preferably in a range of 10% to 30% by mass with respect to the total mass of the polymer having any one or both of a urea bond and a urethane bond described below in the main chain.

In a case where the content thereof is 2% by mass or greater, the effect of improving the printing durability during the burning treatment is sufficiently obtained and the effect of improving the UV ink printing durability and the cleaner resistance in a case where the burning treatment is not performed is also sufficiently obtained.

In a case where the content thereof is 50% by mass or less, required development resistance is obtained, the minimum halftone dots are unlikely to be deficient, and the printing durability during the printing tends to be improved in a case where the developer is highly active.

### <Polymer having any one or both of urea bond and urethane bond in main chain>

The positive type planographic printing plate precursor according to the present disclosure contains a polymer having any one or both of a urea bond and a urethane bond in the main chain.

The polymer used in the present disclosure is not particularly limited as long as the polymer has been known in the related art, but a urea resin or a urethane resin described below is preferably used.

### [Urea resin]

In the present disclosure, a polymer whose main chain is formed of a urea bond is set as a urea resin.

Typically, a "urea bond" is represented by Formula: -NR₁CONR₂-. In the present application, R¹ and R² each independently represent a hydrogen atom or an alkyl group having 1 to 10 carbon atoms (such as a methyl group, an ethyl group, a propyl group, an isopropyl group, a tert-butyl group, a pentyl group, a hexyl group, or a cyclohexyl group) and preferably a hydrogen atom or an alkyl group having 5 or less carbon atoms.

A urea bond may be formed using any means, but can be obtained by reacting an isocyanate compound with an amine compound. Alternatively, a urea compound substituted with an alkyl group containing a hydroxy group or an amino group in the terminal, such as 1,3-bis(2-aminoethyl)urea, 1,3-bis(2-hydroxyethyl)urea, or 1,3-bis(2-hydroxypropyl)urea, may be synthesized as a raw material.

The isocyanate compound used as a raw material can be used without limitation as long as the isocyanate compound is a polyisocyanate compound containing two or more isocyanate groups in a molecule. Among examples thereof, a diisocyanate compound is preferable.

Examples of the polyisocyanate compound include 1,3-bis(isocyanatomethyl)cyclohexane, isophorone diisocyanate, trimethylene diisocyanate, tetramethylene diisocyanate, pentamethylene diisocyanate, hexamethylene diisocyanate, 1,3-cyclopentane diisocyanate, 9H-fluorene-2,7-diisocyanate, 9H-fluorene-9-one-2,7-diisocyanate, 4,4'-diphenylmethane diisocyanate, 1,3-phenylene diisocyanate, tolylene-2,4-diisocyanate, tolylene-2,6-diisocyanate, 1,3-bis(isocyanatomethyl)cyclohexane, 2,2-bis(4-isocyanatophenyl)hexafluoropropane, and 1,5-diisocyanatonaphthalene.

The amine compound used as a raw material can be used without limitation as long as the amine compound is a polyamine compound containing two or more amino groups in a molecule. Among examples thereof, a diamine compound is preferable.

Examples of the polyamine compound include 2,7-diamino-9H-fluorene, 3,6-diaminoacridine, acriflavine, acridine yellow, 2,2-bis(4-aminophenyl)hexafluoropropane, 4,4'-diaminobenzophenone, bis(4-aminophenyl) sulfone, 4,4'-diaminodiphenyl ether, bis(4-aminophenyl) sulfide, 1,1-bis(4-aminophenyl)cyclohexane, 4,4'-diaminodiphenylmethane, 3,3 '-diaminodiphenylmethane, 3,3 '-diaminobenzophenone, 4,4'-diamno-3,3'-dimethyldiphenylmethane, 4-(phenyldiazenyl)benzene-1,3-diamine, 1,5-diaminonaphthalene, 1,3-phenylenediamine, 2,4-diaminotoluene, 2,6-diaminotoluene, 1,8-diaminonaphthalene, 1,3-diaminopropane, 1,3-diaminopentane, 2,2-dimethyl-1,3-propanediamine, 1,5-diaminopentane, 2-methyl-1,5-diaminopentane, 1,7-diaminoheptane, N,N-bis(3-aminopropyl)methylamine, 1,3-diamino-2-propanol, diethylene glycol bis(3-aminopropyl) ether, m-xylylenediamine, tetraethylenepentamine, 1,3-bis(aminomethyl)cyclohexane, benzoguanamine, 2,4-diamino-1,3,5-triazine, 2,4-diamino-6-methyl-1,3,5-triazine, 6-chloro-2,4-diaminopyrimidine, and 2-chloro-4,6-diamino-1,3,5-triazine.

Polyisocyanate may be synthesized by reacting phosgene or triphosgene with these polyamines and then used as a raw material.

### [Urethane resin]

In the present disclosure, a polymer whose main chain is formed of a urethane bond is referred to as a urethane resin. In the present application, a "urethane bond" is represented by Formula: -OCONR³-. Here, R³ represents a hydrogen atom or an alkyl group having 1 to 10 carbon atoms (such as a methyl group, an ethyl group, a propyl group, an isopropyl group, a tert-butyl group, a pentyl group, a hexyl group, or a cyclohexyl group), preferably a hydrogen atom or an alkyl group having 5 or less carbon atoms, and more preferably a hydrogen atom or a methyl group.

A urethane bond may be formed using any means, but can be obtained by reacting an isocyanate compound with a compound containing a hydroxy group.

As the isocyanate compound used as a raw material, a polyisocyanate compound containing two or more isocyanate groups in a molecule is preferable, and a diisocyanate compound is more preferable. As the polyisocyanate compound, the polyisocyanate compound described as a raw material that forms a urea bond may be exemplified.

Examples of the compound containing a hydroxy group, which is used as a raw material, include a polyol compound, an amino alcohol compound, an aminophenol compound, and an alkylaminophenol compound. Among these, a polyol compound or an amino alcohol compound is preferable.

The polyol compound is a compound containing at least two hydroxy groups in a molecule and is preferably a diol compound. In addition, a molecule may have an ester bond or an ether bond. Examples of the polyol compound include ethylene glycol, propylene glycol, 1,4-butanediol, 1,5-pentanediol, 1,6-hexanediol, neopentyl glycol, polyethylene glycol, polytetramethylene glycol, 1,4-cyclohexane dimethanol, pentaerythritol, 3-methyl-1,5-pentanediol, poly(ethyleneadipate), poly(diethyleneadipate), poly(propyeleneadipate), poly(tetramethyleneadipate), poly(hexamethyleneadipate), and poly(neopentyleneadipate).

The amino alcohol compound is a compound containing an amino group and a hydroxy group in a molecule, and a molecule may further have an ether bond. Examples of the amino alcohol include aminoethanol, 3-amino-1-propanol, 2-(2-aminoethoxy)ethanol, 2-amino-1,3-propanediol, 2-amino-2-methyl-1,3-propanediol, and 1,3-diamino-2-propanol.

It is preferable that a polymer having any one or both of a urea bond and a urethane bond, used in the present disclosure, in the main chain further contains an acid group.

As the acid group, at least one group selected from the group consisting of a phenolic hydroxyl group, a sulfonamide group, an active imide group, and a carboxylic acid group is preferable, and a phenolic hydroxyl group or a sulfonamide group is more preferable.

Further, the "sulfonamide group is contained in the main chain" means that a divalent group represented by -SO₂-NH- is contained in the main chain.

The polymer may contain the acid group in any of the main chain and a side chain, but it is preferable that the acid group is contained in the main chain.

The content of the polymer having any one or both of a urea bond and a urethane bond, used in the present disclosure, in the main chain is preferably in a range of 10% to 95% by mass, more preferably in a range of 20% to 90% by mass, and still more preferably in a range of 30% to 85% by mass with respect to the total mass of the solid content in the image recording layer. In addition, the total mass of the solid content in the image recording layer indicates the amount obtained by removing volatile components such as a solvent.

The weight-average molecular weight of the polymer having any one or both of a urea bond and a urethane bond, used in the present disclosure, in the main chain is preferably in a range of 10000 to 300000, more preferably in a range of 15000 to 200000, and still more preferably in a range of 20000 to 150000.

The weight-average molecular weight indicates a weight-average molecular weight in terms of polystyrene to be measured by gel permeation chromatography (GPC) in a case where tetrahydrofuran (THF) is used as a solvent.

Hereinafter, specific examples of the polymer having any one or both of a urea bond and a urethane bond, used in the present disclosure, in the main chain will be described, but the present invention is not limited to these. In Formulae PU-1 to PU-5, the numerical values on the lower right side of the parentheses respectively represent a containing molar ratio of a constitutional unit. Further, in Formulae PU-1 to PU-5, the description for carbon atoms and hydrogen atoms of hydrocarbons will not be provided.

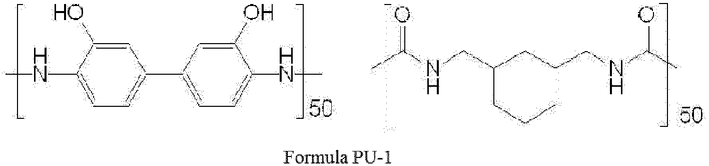

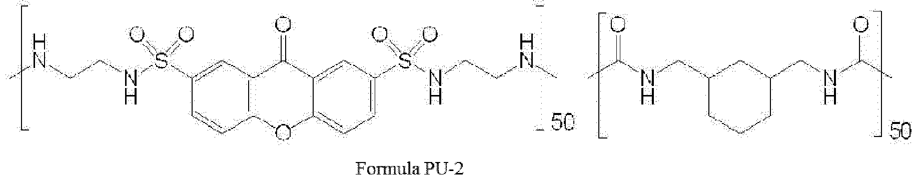

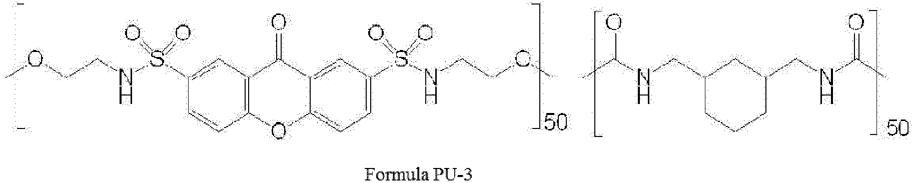

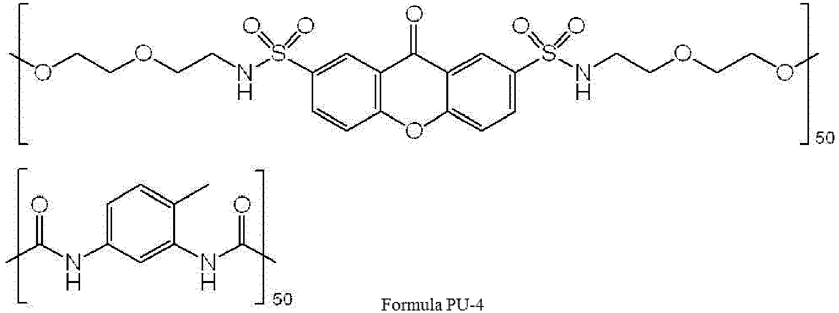

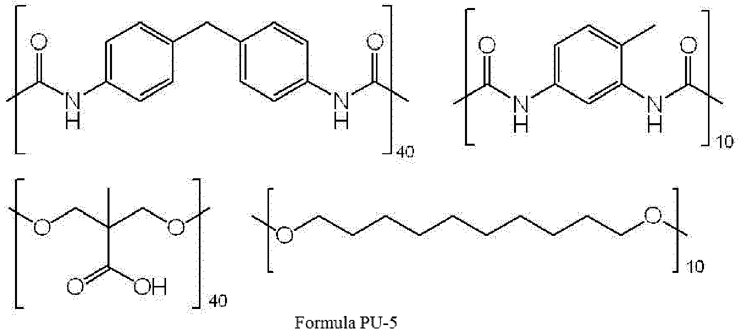

### <Infrared absorbent>

The image recording layer of the present disclosure contains an infrared absorbent.

The infrared absorbent is not particularly limited as long as it is a dye which generates heat by absorbing infrared light, and various dyes known as an infrared absorbent can be used.

As the infrared absorbent which can be used in the present disclosure, commercially available dyes or known dyes described in documents (for example, "Dye Handbook", compiled by the Society of Synthetic Organic Chemistry, published in 1970) can be used. Specifically, dyes such as azo dyes, metal complex salt azo dyes, pyrazolone azo dyes, anthraquinone dyes, phthalocyanine dyes, carbonium dyes, quinone imine dyes, methine dyes, and cyanine dyes are exemplified. In the present disclosure, among these dyes, a dye absorbing at least infrared light or near infrared light is preferable from the viewpoint of being suitable for use in laser emitting infrared light or near infrared light, and a cyanine dye is particularly preferable.

Examples of such a dye absorbing at least infrared light or near infrared light include the cyanine dyes described in JP1983-125246A (JP-S58-125246A), JP1984-84356A (JP-S59-84356A), JP-1984-202829A (JP-S59-202829A), or JP1985-78787A (JP-S60-78787A), the methine dyes described in JP1983-173696A (JP-S58-173696A), JP1983-181690A (JP-S58-181690A), or JP1983-194595A (JP-S58-194595A), the naphthoquinone dyes described in JP1983-112793A (JP-S58-112793A), JP1983-224793A (JP-S58-224793A), JP1984-48187A (JP-S59-48187A), JP1984-73996A (JP-S59-73996A), JP1985-52940A (JP-S60-52940A), or JP1985-63744A (JP-S60-63744A), the squarylium coloring agents described in JP1983-112792A (JP-S58-112792A), and the cyanine dyes described in GB434875B.

In addition, as the dye, the near infrared absorbing sensitizers described in US5156938A are also suitably used, also, the substituted aryl benzo(thio)pyrylium salts described in US3881924A, the trimethinecyanine thiapyrylium salts described in JP1982-142645A (JP-S57-142645A) (US4327169A), the pyrylium-based compounds described in JP1983-181051A (JP-S58-181051A), JP1983-220143A (JP-S58-220143A), JP1984-41363A (JP-S59-41363A), JP1984-84248A (JP-S59-84248A), JP1984-84249A (JP-S59-84249A), JP1984-146063A (JP-S59-146063A), or JP1984-146061A (JP-S59-146061A), the cyanine coloring agents described in JP1984-216146A (JP-S59-216146A), the pentamethinethiopyrylium salts described in US4283475A, or the pyrylium compounds described in JP1993-13514B (JP-H05-13514B) or JP1993-19702B (JP-H05-19702B) are used, and as commercially available products, Epolight III-178, Epolight III-130, Epolight III-125, or the like (manufactured by Epolin Inc.) is particularly preferably used.

In addition, particularly preferable another examples of the dye include near infrared absorbing dyes described as Formula (I) or (II) in US4756993A.

Among these dyes, examples of a particularly preferable dye include a cyanine coloring agent, a phthalocyanine dye, an oxonol dye, a squarylium coloring agent, a pyrylium salt, a thiopyrylium dye, and a nickel thiolate complex. Furthermore, in a case where a cyanine coloring agent represented by the following Formula (a) is used in the upper layer in the present disclosure, a high polymerization activity is given and the stability and the economic efficiency become excellent, and thus, the cyanine coloring agent is most preferable.

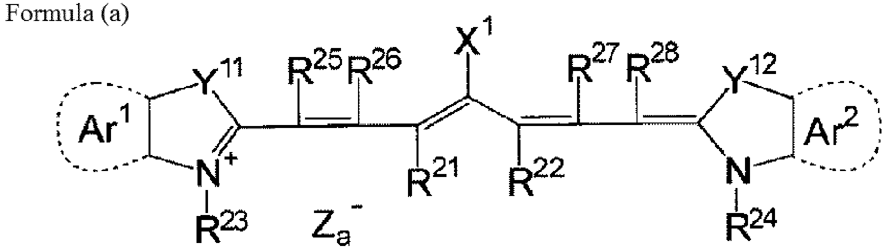

In Formula a, X¹ represents a hydrogen atom, a halogen atom, a diarylamino group (-NPh₂), X²-L², or a group shown represented by Formula (b). X² represents an oxygen atom or a sulfur atom. L² represents a hydrocarbon group having 1 to 12 carbon atoms, an aromatic ring having a heteroatom, or a hydrocarbon group having 1 to 12 carbon atoms including a heteroatom. Here, the heteroatom represents N, S, O, a halogen atom, or Se.

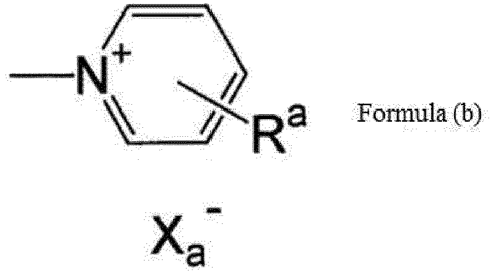

In Formula (b), Xa⁻ has the same definition as Za⁻ described below, and R^{a} represents a substituent selected from a hydrogen atom, an alkyl group, an aryl group, a substituted or unsubstituted amino group, and a halogen atom.

R²¹ and R²² each independently represent a hydrocarbon group having 1 to 12 carbon atoms. From the viewpoint of storage stability of the coating solution for forming an image recording layer, each of R²¹ and R²² is preferably a hydrocarbon group having two or more carbon atoms, and R²¹ and R²² are particularly preferably bonded to each other to form a 5-membered ring or a 6-membered ring.

Ar¹ and Ar² may be the same as or different from each other, and Ar¹ and Ar² each represent an aromatic hydrocarbon group which may have a substituent. Examples of a preferable aromatic hydrocarbon group include a benzene ring and a naphthalene ring. In addition, examples of a preferable substituent include a hydrocarbon group having 12 or less carbon atoms, a halogen atom, and an alkoxy group having 12 or less carbon atoms.

Y¹¹ and Y¹² may be the same as or different from each other, and Y¹¹ and Y¹² each represent a sulfur atom or a dialkyl methylene group having 12 or less carbon atoms. R²³ and R²⁴ may be the same as or different from each other, and R²³ and R²⁴ each represent a hydrocarbon group having 20 or less carbon atoms which may have a substituent. Examples of a preferable substituent include an alkoxy group having 12 or less carbon atoms, a carboxyl group, and a sulfo group.

R²⁵, R²⁶, R²⁷, and R²⁸ may be the same as or different from each other, and R²⁵, R²⁶, R²⁷, and R²⁸ each represent a hydrogen atom or a hydrocarbon group having 12 or less carbon atoms. From the viewpoint of availability of a raw material, each of R²⁵, R²⁶, R²⁷, and R²⁸ is preferably a hydrogen atom. In addition, Za⁻ represents a counter anion. Here, the cyanine coloring agent represented by Formula (a) has an anionic substituent in the structure thereof, and in a case where neutralization of the charge is not necessary, Za⁻ is not necessary. From the viewpoint of storage stability of the coating solution for forming an image recording layer, Za⁻ is preferably a halide ion, a perchlorate ion, a tetrafluoroborate ion, a hexafluorophosphate ion, or a sulfonate ion, and particularly preferably a perchlorate ion, a hexafluorophosphate ion, or an arylsulfonate ion.

Specific examples of the cyanine coloring agent represented by Formula (a) which can be suitably used include the cyanine coloring agents described in paragraphs 0017 to 0019 of JP2001-133969A, paragraphs 0012 to 0038 of JP2002-40638A, and paragraphs 0012 to 0023 of JP2002-23360A.

The infrared absorbent contained in the upper layer is particularly preferably a cyanine dye A shown below.

### Cyanine dye A

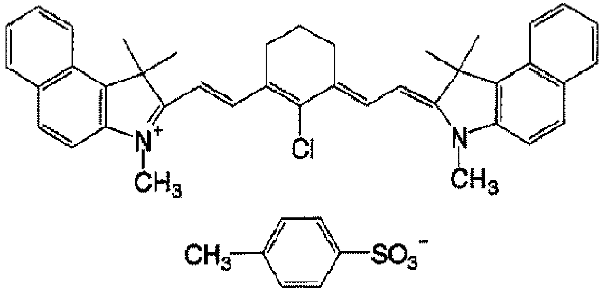

The content of the infrared absorbent to be added to the image recording layer according to the present disclosure is preferably in a range of 0.01% to 50% by mass, more preferably in a range of 0.1% to 30% by mass, and particularly preferably in a range of 1.0% to 30% by mass, with respect to the total mass of the solid content in the image recording layer. In a case where the content thereof is 0.01% by mass or greater, the layer becomes high sensitive, and in a case where the content thereof is 50% by mass or less, the uniformity of the layer is excellent and the durability of the layer is excellent.

The image recording layer according to the present disclosure may contain other components as desired within the range not damaging the effects of the planographic printing plate according to the present disclosure.

Hereinafter, a phenol resin having a weight-average molecular weight of greater than 2000, an acid generator, an acid proliferation agent, and other additives, which are optional components of the image recording layer according to the present disclosure, will be described below.

### <Phenol resin>

It is preferable that the image recording layer used in the present disclosure further contains a phenol resin having a weight-average molecular weight of greater than 2000. The phenol resin having a weight-average molecular weight of greater than 2000 is a phenol resin contains phenol or substituted phenols as a constitutional unit, and a novolac resin is preferable as the phenol resin. A novolac resin is an alkali-soluble resin preferably used for the image recording layer according to the present disclosure from the viewpoint that strong hydrogen bonding properties are generated in an unexposed portion and some hydrogen bonds in an exposed portion are easily released.

The novolac resin is not particularly limited as long as the novolac resin contains phenols as a constitutional unit in a molecule.

The novolac resin in the present disclosure is a resin obtained by a condensation reaction between phenol or substituted phenols and aldehydes described below, and specific examples of the phenols include phenol, isopropylphenol, t-butylphenol, t-amylphenol, hexylphenol, cyclohexylphenol, 3-methyl-4-chloro-6-t-butylphenol, isopropyl cresol, t-butyl cresol, and t-amyl cresol. Among these, t-butylphenol and t-butyl cresol are preferable. Further, examples of the aldehydes include aliphatic and aromatic aldehydes such as formaldehyde, acetaldehyde, acrolein, and crotonaldehyde. Among these, formaldehyde and acetaldehyde are preferable.

More specifically, examples of the novolac resin of the present disclosure include a condensation polymer of phenol and formaldehyde (phenol formaldehyde resin), a condensation polymer of m-cresol and formaldehyde (m-cresol formaldehyde resin), a condensation polymer of p-cresol and formaldehyde (p-cresol formaldehyde resin), a condensation polymer of m-/p- mixed cresol and formaldehyde (m-/p- mixed cresol formaldehyde resin), a condensation polymer (phenol/cresol (any mixture of m-, p-, or m-/p-) mixed formaldehyde resin) of phenol and cresol (any mixture of m-, p-, or m-/p-) and formaldehyde.

In addition, examples of the novolac resin include a condensation polymer of phenol having an alkyl group having 3 to 8 carbon atoms as a substituent and formaldehyde, such as a t-butyl phenol formaldehyde resin or an octyl phenol formaldehyde resin, as described in US4123279A.

Among these novolac resins, a phenol formaldehyde resin, a phenol/cresol-mixed formaldehyde resin, and the like are particularly preferable.

The weight-average molecular weight of the phenol resin is preferably greater than 2000 and 50000 or less, more preferably in a range of 2500 to 20000, and particularly preferably in a range of 3000 to 10000. Further, the dispersity (weight-average molecular weight/number average molecular weight) thereof is preferably in a range of 1.1 to 10.

The number average molecular weight indicates a number average molecular weight in terms of polystyrene to be measured by gel permeation chromatography (GPC) in a case where tetrahydrofuran (THF) is used as a solvent.

Such a phenol resin may be used alone or in combination of two or more kinds thereof.

Form the viewpoints of burning suitability and image forming properties, the content of the phenol resin in the image recording layer according to the present disclosure is preferably in a range of 1% to 90% by mass, more preferably in a range of 5% to 50% by mass, and particularly preferably in a range of 10% to 30% by mass with respect to the total mass of the polymer having any one or both of a urea bond and a urethane bond in the main chain.

### <Acid generator>

The image recording layer of the present disclosure preferably contains an acid generator, from the viewpoint of sensitivity improvement.

The acid generator in the present disclosure is a compound which generates an acid by light or heat, and indicates a compound which generates an acid due to decomposition by irradiation with infrared rays or heating at 100°C or higher. The acid generated is preferably a strong acid having a pKa of 2 or less such as sulfonic acid or hydrochloric acid. The permeability of a developer into the image recording layer of the exposed portion is increased and the solubility of the image recording layer in an alkali aqueous solution is further improved due to an acid generated from this acid generator.

Examples of the acid generator suitably used in the present disclosure include onium salts such as an iodonium salt, a sulfonium salt, a phosphonium salt, and a diazonium salt. Specifically, the compounds described in US4708925A or JP1995-20629A (JP-H07-20629A) can be exemplified. In particular, an iodonium salt, a sulfonium salt, or a diazonium salt, which has a sulfonate ion as a counter ion, is preferable. As the diazonium salt, the diazonium compound described in US3867147A, the diazonium compound described in US2632703A, or the diazo resins described in JP1989-102456A (JP-H01-102456A) or JP1989-102457A (JP-H01-102457A) are also preferable. In addition, the benzyl sulfonates described in US5135838A or US5200544A are also preferable. Furthermore, the active sulfonic acid esters or the disulfonyl compounds described in JP1990-100054A (JP-H02-100054A), JP1990-100055A (JP-H02-100055A), or JP1996-9444 (JP-H08-9444) are also preferable. In addition, the haloalkyl-substituted S-triazines described in JP1995-271029A (JP-H07-271029A) are also preferable.

Furthermore, the compound described as an "acid precursor" in JP1996-220752A (JP-H08-220752A) or the compound described as "(a) a compound which can generate an acid by irradiation with active light" in JP1997-171254A (JP-H09-171254A) can also be applied as the acid generator of the present disclosure.

Among these, from the viewpoint of sensitivity and stability, an onium salt compound is preferably used as an acid generator. The onium salt compound will be described below.

As the onium salt compound which can be suitably used in the present disclosure, compounds known as a compound which generates an acid due to decomposition by infrared ray exposure or heat energy generated from the infrared absorbent by exposure can be exemplified. As the onium salt compound suitable in the present disclosure, from the viewpoint of sensitivity, known thermal polymerization initiators or compounds having a bond with small bond dissociation energy and having an onium salt structure described below can be exemplified.

Examples of the onium salt suitably used in the present disclosure include known diazonium salts, iodonium salts, sulfonium salts, ammonium salts, pyridinium salts, and azinium salts, and among these, sulfonate of triarylsulfonium or diaryliodonium, carboxylate, BF₄⁻, PF₆⁻, or ClO₄⁻ is preferable.

Examples of the onium salt which can be used as an acid generator in the present disclosure include onium salts represented by the following Formulae (III) to (V).

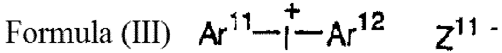

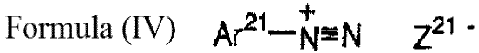

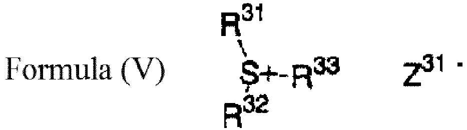

In Formula III, Ar¹¹ and Ar¹² each independently represent an aryl group having 20 or less carbon atoms which may have a substituent. Examples of a preferable substituent in a case where the aryl group has a substituent include a halogen atom, a nitro group, an alkyl group having 12 or less carbon atoms, an alkoxy group having 12 or less carbon atoms, and an aryloxy group having 12 or less carbon atoms. Z¹¹⁻ represents a counter ion selected from the group consisting of a halogen ion, a perchlorate ion, a tetrafluoroborate ion, a hexafluorophosphate ion, a sulfonate ion, or a sulfonate ion having a fluorine atom such as a perfluoroalkyl sulfonate ion, and a perchlorate ion, a hexafluorophosphate ion, an aryl sulfonate ion, or a perfluoroalkyl sulfonic acid is preferable.

In Formula IV, Ar²¹ represents an aryl group having 20 or less carbon atoms which may have a substituent. Examples of a preferable substituent include a halogen atom, a nitro group, an alkyl group having 12 or less carbon atoms, an alkoxy group having 12 or less carbon atoms, an aryloxy group having 12 or less carbon atoms, an alkylamino group having 12 or less carbon atoms, a dialkylamino group having 12 or less carbon atoms, an arylamino group having 12 or less carbon atoms, and a diarylamino group having 12 or less carbon atoms. Z²¹⁻ represents a counter ion having the same meaning as Z¹¹⁻.

In Formula V, R³¹, R³², and R³³ may be the same as or different from each other, and R³¹, R³², and R³³ each represent a hydrocarbon group having 20 or less carbon atoms which may have a substituent. Examples of a preferable substituent include a halogen atom, a nitro group, an alkyl group having 12 or less carbon atoms, an alkoxy group having 12 or less carbon atoms, and an aryloxy group having 12 or less carbon atoms. Z³¹⁻ represents a counter ion having the same meaning as Z¹¹⁻.

In the present disclosure, specific examples of onium salts (OI-1 to OI-10) represented by Formula III, onium salts (ON-1 to ON-5) represented by Formula IV, and onium salts (OS-1 to OS-6) represented by Formula V which can be suitably used in the present invention are exemplified below.

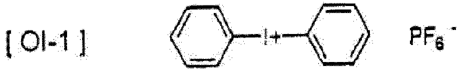

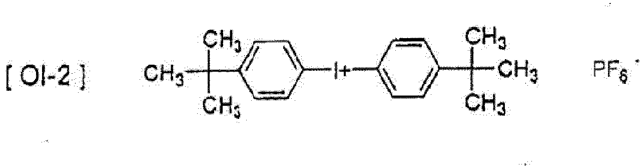

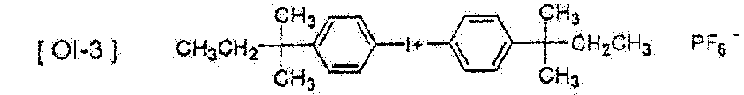

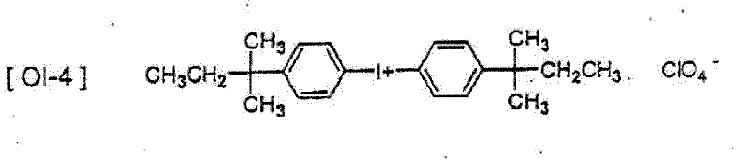

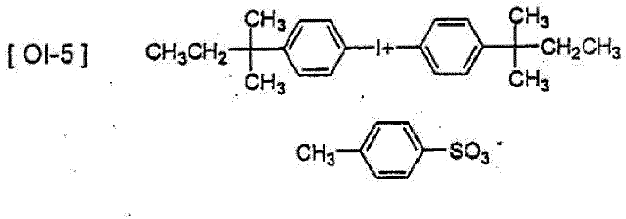

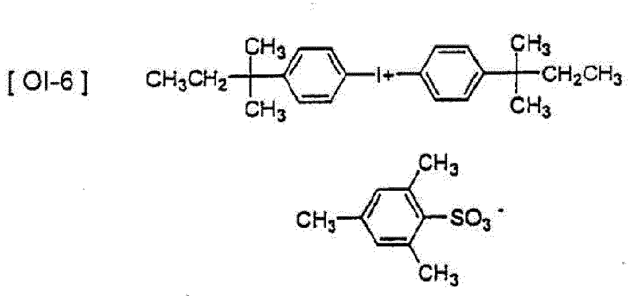

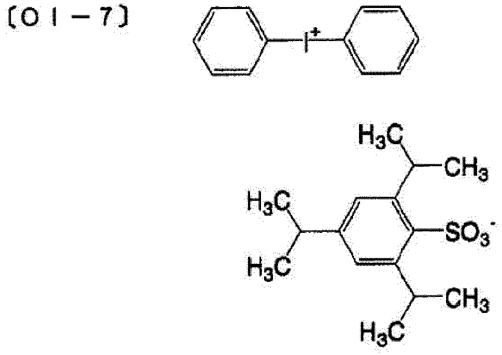

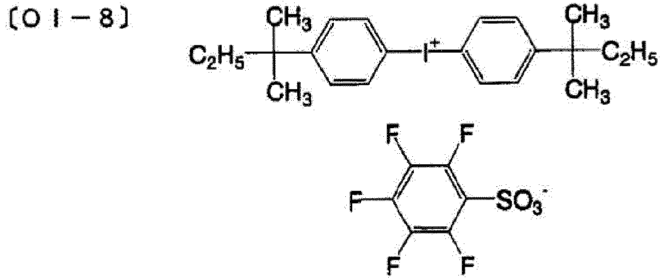

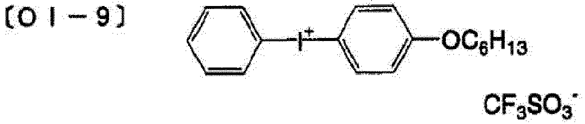

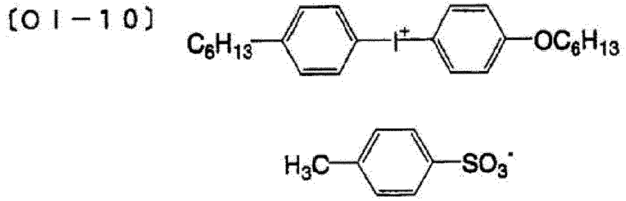

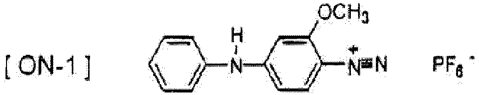

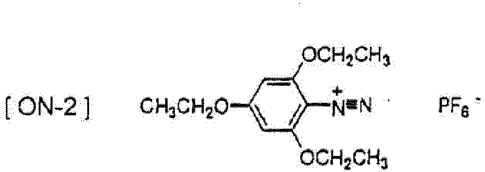

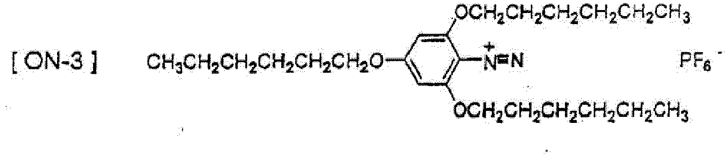

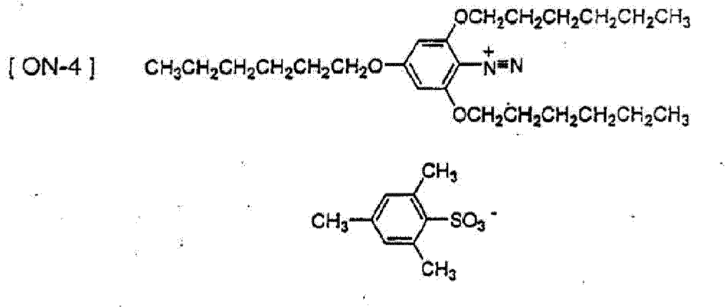

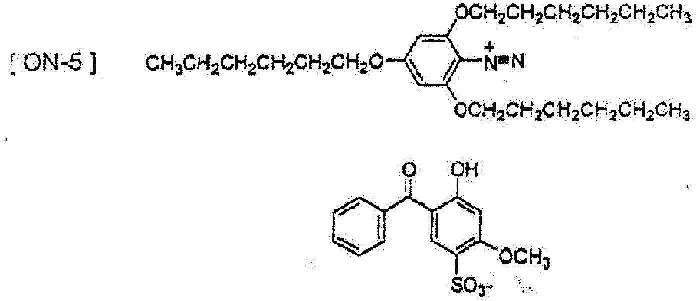

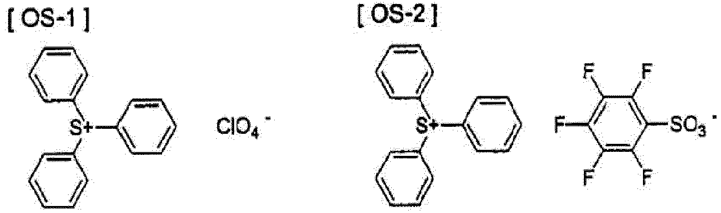

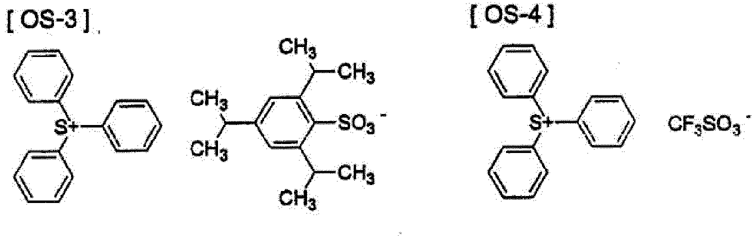

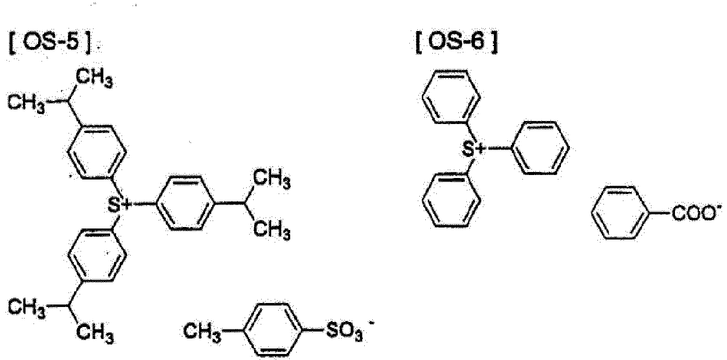

In addition, as another example of the compounds represented by each of Formulae III to V, the compounds described as an example of a radical polymerization initiator in paragraphs 0036 to 0045 of JP2008-195018A can be suitably used as an acid generator in the present disclosure.

Another example of a preferable onium salt as the acid generator used in the present disclosure includes an azinium salt compound represented by the following Formula VI.

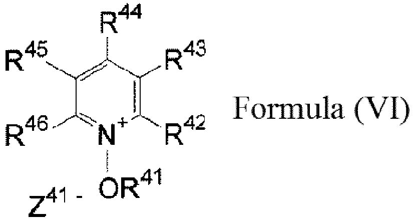

In Formula VI, R⁴¹, R⁴², R⁴³, R⁴⁴, R⁴⁵, and R⁴⁶ may be the same as or different from each other, and R⁴¹, R⁴², R⁴¹, R⁴⁴, R⁴⁵, and R⁴⁶ each represent a hydrogen atom, a halogen atom, or a monovalent substituent.

Examples of the monovalent substituent include a halogen atom, an amino group, a substituted amino group, a substituted carbonyl group, a hydroxyl group, a substituted oxy group, a thiol group, a thioether group, a silyl group, a nitro group, a cyano group, an alkyl group, an alkenyl group, an aryl group, a heterocyclic group, a sulfo group, a substituted sulfonyl group, a sulfonate group, a substituted sulfinyl group, a phosphono group, a substituted phosphono group, a phosphonate group, and a substituted phosphonate group, and in the case of being introducible, each of R⁴¹, R⁴², R⁴³, R⁴⁴, R⁴⁵, and R⁴⁶ may further have a substituent.

A compound (multimerized form) including two or more cation portions in the molecule as a result of bonding of the skeletons (cation portions) having a specific structure in the compound represented by Formula VI to each other through R⁴¹ is also included in examples of the compound represented by Formula VI, and such a compound is also suitably used.

Z⁴¹⁻ represents a counter ion having the same meaning as Z¹¹⁻.

Specific examples of the azinium salt compound represented by Formula VI include the compounds described in paragraphs 0047 to 0056 of JP2008-195018A.

In addition, a compound group having an N-O bond described in JP1988-138345A (JP-S63-138345A), JP1988-142345A (JP-S63-142345A), JP1988-142346A (JP-S63-142346A), JP1988-143537A (JP-S63-143537A), or JP1971-42363B (JP-S46-42363B) is also suitably used as the acid generator in the present disclosure.

More preferable examples of the acid generator which can be used in the present disclosure include the following compounds (PAG-1) to (PAG-5).

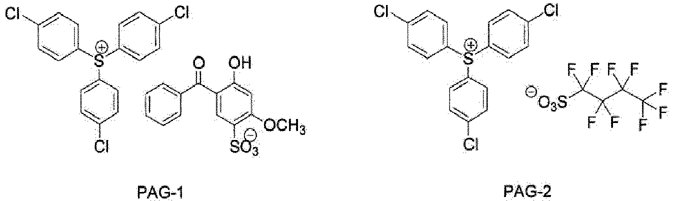

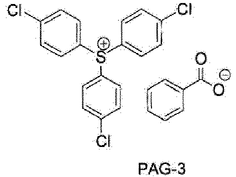

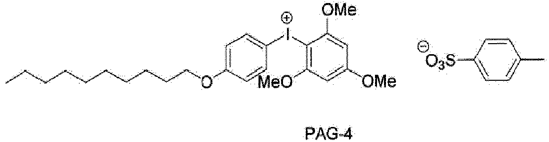

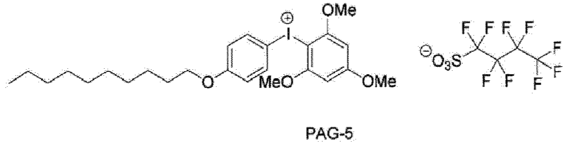

In a case where these acid generators are contained in the image recording layer according to the present disclosure, these compounds may be used alone or in combination of two or more types thereof.

The content of acid generator is preferably in a range of 0.01% to 50% by mass, more preferably in a range of 0.1% to 40% by mass, and still more preferably in a range of 0.5% to 30% by mass with respect to the total mass of the solid content in the image recording layer. In a case where the content is within the above-described range, improvement of sensitivity which is the effect of the addition of an acid generator is observed, and an occurrence of a residual film in a non-image area is suppressed.

### <Acid proliferation agent>

An acid proliferation agent may be added to the image recording layer of the present disclosure. The acid proliferation agent in the present disclosure is a compound substituted with a residue of a relatively strong acid, and a compound which newly generates an acid by being easily released in the presence of an acid catalyst. That is, the compound is decomposed by an acid catalyzed reaction, and generates an acid (hereinafter, referred to as ZOH in formulae) again. Since one or more acids per reaction are increased, and with the progress of the reaction, the acid concentration is increasingly increased, sensitivity is dramatically improved. The intensity of this generated acid is 3 or less as an acid dissociation constant (pKa), and preferably 2 or less. In the case of a weaker acid than this, it is not possible to cause the elimination reaction by an acid catalyst.

Examples of the acid used in such an acid catalyst include dichloroacetic acid, trichloroacetic acid, methanesulfonic acid, ethanesulfonic acid, benzenesulfonic acid, p-toluenesulfonic acid, naphthalenesulfonic acid, and phenyl sulfonic acid.

As the acid proliferation agent, the acid proliferation agents described in WO95/29968A, WO98/24000A, JP1996-305262A (JP-H08-305262A), JP1997-34106A (JP-H09-34106A), JP1996-248561A (JP-H08-248561A), JP1996-503082A (JP-H08-503082A), US5445917A, JP1996-503081A (JP-H08-503081A), US5534393A, US5395736A, US5741630A, US5334489A, US5582956A, US5578424A, US5453345A, US5445917A, EP665960B, EP757628B, EP665961B, US5667943A, or JP1998-1598A (JP-H10-1598A) can be used alone or in combination of two or more types thereof.

Specific preferred examples of the acid proliferation agent in the present disclosure include the compounds described in paragraphs 0056 to 0067 of JP2001-66765A. Among these, the following compounds described as an exemplary compound (ADD-1), (ADD-2), or (ADD-3) can be suitably used.

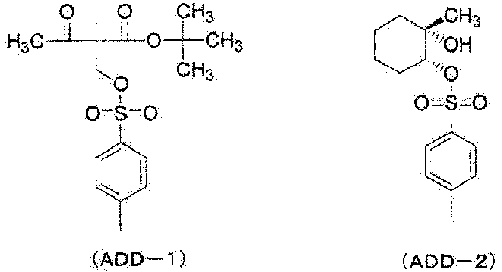

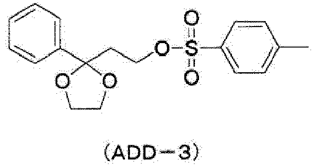

The content of the acid proliferation agent to be added to the image recording layer is in a range of 0.01% to 20% by mass, preferably in a range of 0.01% to 10% by mass, and more preferably in a range of 0.1% to 5% by mass with respect to the total mass of the solid content in the image recording layer. In a case where the content of the acid proliferation agent is in the above-described range, effects of adding acid proliferation agent are sufficiently obtained, improvement in sensitivity is achieved, and film hardness reduction of an image area is suppressed.

### <Other additives>

The image recording layer of the present disclosure may include a development accelerator, a surfactant, a print-out agent/colorant, a plasticizer, or a wax agent, as other additives.

### <Development accelerator>

For the purpose of improving sensitivity, acid anhydrides, phenols, or organic acids may be added to the image recording layer of the present disclosure.

As the acid anhydrides, cyclic acid anhydride is preferable, and specifically, as the cyclic acid anhydride, phthalic anhydride, tetrahydrophthalic anhydride, hexahydrophthalic anhydride, 3,6-endooxytetrahydrophthalic anhydride, tetrachlorophthalic anhydride, maleic anhydride, chloromaleic anhydride, α-phenylmaleic anhydride, succinic anhydride, or pyromellitic anhydride described in US4115128A can be used. As the non-cyclic acid anhydride, acetic anhydride is exemplified.

Examples of the phenols include bisphenol A, 2,2'-bishydroxysulfone, p-nitrophenol, p-ethoxyphenol, 2,4,4'-trihydroxybenzophenone, 2,3,4-trihydroxybenzophenone, 4-hydroxybenxophenone, 4,4',4"-trihydroxytriphenyl methane, and 4,4',3",4"-tetrahydroxy-3,5,3',5'-tetramethyltriphenyl methane.

The organic acids are described in JP1985-88942A (JP-S60-88942A), JP1990-96755A (JP-H02-96755A), or the like, and specific examples thereof include p-toluenesulfonic acid, dodecylbenzenesulfonic acid, p-toluenesulfinic acid, ethyl sulfate, phenylphosphonic acid, phenylphosphinic acid, phenyl phosphate, diphenyl phosphate, benzoic acid, isophthalic acid, adipic acid, p-toluic acid, 3,4-dimethoxybenzoic acid, phthalic acid, terephthalic acid, 4-cyclohexene-1,2-dicarboxylic acid, erucic acid, lauric acid, n-undecanoic acid, and ascorbic acid. The ratio of the mass of the acid anhydrides, the phenols, and the organic acids to the total mass of the solid content in the image recording layer is preferably in a range of 0.05% to 20% by mass, more preferably in a range of 0.1% to 15% by mass, and particularly preferably in a range of 0.1% to 10% by mass.

### <Surfactant>

To improve coating properties and stability of a treatment with respect to development conditions, a nonionic surfactant as described in JP1987-251740A (JP-S62-251740A) or JP1991-208514A (JP-H03-208514A), an amphoteric surfactant as described in JP1984-121044A (JP-S59-121044A) or JP1992-13149A (JP-H04-13149A), or a fluorine-containing monomer copolymer such as JP1987-170950A (JP-S62-170950A), JP1999-288093A (JP-H11-288093A), or JP2003-57820A can be added to the image recording layer of the present disclosure.

Specific examples of the nonionic surfactant include sorbitan tristearate, sorbitan monopalmitate, sorbitan trioleate, monoglyceride stearate, and polyoxyethylenenonylphenyl ether.

Specific examples of the amphoteric surfactant include alkyl di(aminoethyl)glycine, alkylpolyaminoethylglycine hydrochloride, 2-alkyl-N-carboxyethyl-N-hydroxyethyl imidazolinium betaine, and an N-tetradecyl-N,N-betaine type (for example, trade name "AMOGEN K", manufactured by Dai-ichi Kogyo Seiyaku Co., Ltd.).

The ratio of the mass of the surfactant to the total mass of the solid content in the image recording layer is preferably in a range of 0.01% to 15% by mass, more preferably in a range of 0.01% to 5% by mass, and still more preferably in a range of 0.05% to 2.0% by mass.

### <Print-out agent/colorant>

A print-out agent for obtaining a visible image immediately after heating by exposure or a dye or a pigment as an image colorant can be added to the image recording layer of the present disclosure.

Examples of the print-out agent and the colorant are described in detail in paragraphs 0122 and 0123 of JP2009-229917A, and the compounds described here can be applied to the planographic printing plate precursor of the present disclosure.

The dye is preferably added in a ratio of 0.01% to 10% by mass and more preferably added in a ratio of 0.1% to 3% by mass, with respect to the total mass of the solid content in the image recording layer.

### <Plasticizer>

To impart flexibility or the like to the coating film, a plasticizer may be added to the image recording layer of the present disclosure. For example, butylphthalyl, polyethylene glycol, tributyl citrate, diethyl phthalate, dibutyl phthalate, dihexyl phthalate, dioctyl phthalate, tricresyl phosphate, tributyl phosphate, trioctyl phosphate, tetrahydrofurfuryl oleate, or an oligomer or a polymer of acrylic acid or methacrylic acid is used.

These plasticizers are preferably added in a ratio of 0.5% to 10% by mass and more preferably added in a ratio of 1.0% to 5% by mass, with respect to the total mass of the solid content in the image recording layer.

### <Wax agent>

For the purpose of imparting resistance against scratches, a compound for reducing the coefficient of static friction of the surface can also be added to the image recording layer of the present disclosure. Specifically, the compounds having an ester of a long chain alkyl carboxylic acid as described in US6117913A, JP2003-149799A, JP2003-302750A, or JP2004-12770A can be exemplified.

As the content of the wax agent, the ratio of the content of the wax agent to the solid content in the image recording layer is preferably in a range of 0.1% to 10% by mass and more preferably in a range of 0.5% to 5% by mass.

### <Compositional ratio of respective components>

The content of the polymer is preferably in a range of 10% to 90% by mass, the content of the infrared absorbent is preferably in a range of 0.01% to 50% by mass, the content of the phenol compound is preferably in a range of 2% to 50% by mass, the content of the phenol resin is preferably in a range of 0% to 50% by mass, the content of the acid generator is preferably in a range of 0% to 30% by mass, the content of the acid proliferation agent is preferably in a range of 0% to 20% by mass, the content of the development accelerator is preferably in a range of 0% to 20% by mass, the content of the surfactant is preferably in a range of 0% to 5% by mass, the content of the print-out agent/colorant is preferably in a range of 0% to 10% by mass, the content of the plasticizer is preferably in a range of 0% to 10% by mass, and the content of the wax agent is preferably in a range of 0% to 10% by mass, with respect to the total mass of the solid content in the image recording layer of the present disclosure.

### <Solvent>

The image recording layer used in the present disclosure can be formed by dissolving respective components of the image recording layer in a solvent and applying the resulting product to a suitable support.

Examples of the solvent used here include ethylene dichloride, cyclohexanone, methyl ethyl ketone, methanol, ethanol, propanol, ethylene glycol monomethyl ether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethyl urea, N-methylpyrrolidone, dimethyl sulfoxide, sulfolane, γ-butyrolactone, toluene, and 1,3-dimethyl-2-imidazolidinone, but the present disclosure is not limited thereto. These solvents are used alone or in a mixture.

### <Formation of underlayer and upper layer>

It is preferable that the image recording layer of the positive type planographic printing plate precursor according to the present disclosure has a multilayer structure (hereinafter, also referred to as a "positive type planographic printing plate precursor having a two-layer structure") formed of at least two layers of an underlayer and an upper layer.

It is preferable that the underlayer and the upper layer are formed by separating these two layers in principle.

As the method of separately forming the two layers, as described in paragraphs 0068 and 0069 of JP2011-209343A, a method of using the difference in the solvent solubilities between the components included in the underlayer and the components included in the upper layer and a method of rapidly drying and removing the solvent after application to the upper layer are exemplified. Since by using the latter method in combination, the separation between the layers is more favorably performed, the method is preferable.

The positive type planographic printing plate precursor according to the present disclosure has a multilayer structure in which the image recording layer is formed of at least two layers of an underlayer and an upper layer. It is preferable that the image recording layer contains a phenol compound containing a phenolic hydroxyl group and a substituent represented by -CH₂OR in a molecule and having a molecular weight of 200 to 2000, a polymer having any one or both of a urea bond and a urethane bond in the main chain, and an infrared absorbent in any one or both of the underlayer and the upper layer; and more preferable that the image recording layer contains the phenol compound, the polymer, and the infrared absorbent in the underlayer.

The content of the phenol compound contained in any one or both of the upper layer and the underlayer according to the present disclosure is preferably in a range of 2% to 50% by mass and more preferably in a range of 10% to 30% by mass with respect to the total mass of the polymer having any one or both of a urea bond and a urethane bond, to be contained in the same layer, in the main chain.

In a case where the content thereof is 2% by mass or greater, the effect of improving the printing durability during the burning treatment is sufficiently obtained and the effect of improving the UV ink printing durability and the cleaner resistance in a case where the burning treatment is not performed is also sufficiently obtained.

In a case where the content thereof is 50% by mass or less, required development resistance is obtained, the minimum halftone dot skipping is unlikely to occur, and the printing durability during the printing tends to be improved in a case where the developer is highly active.

The content of the polymer having any one or both of a urea bond and a urethane bond, contained in any one or both of the upper layer and the underlayer, in the main chain according to the present disclosure is preferably in a range of 10% to 95% by mass, more preferably in a range of 20% to 90% by mass, and still more preferably in a range of 30% to 85% by mass with respect to the total mass of the solid content in any one or both of the upper layer and the underlayer. In a case where the content thereof is in the above-described range, the pattern forming properties after development are improved.

The content of the infrared absorbent contained in any one or both of the upper layer and the underlayer according to the present disclosure is preferably in a range of 0.01% to 50% by mass, more preferably in a range of 0.1% to 30% by mass, and particularly preferably in a range of 1.0% to 30% by mass with respect to the total mass of the solid content in any one or both of the upper layer and the underlayer. In a case where the content thereof is 0.01% by mass or greater, the sensitivity becomes high. Further, in a case where the content thereof is 50% by mass or less, the uniformity of the layer is improved and the durability of the layer is excellent.

The coating amount after drying of the underlayer component applied to the support of the positive type planographic printing plate precursor of the present disclosure is preferably in a range of 0.5 to 4.0 g/m² and more preferably in a range of 0.6 to 2.5 g/m². In a case where the coating amount is 0.5 g/m² or greater, printing durability is excellent, and in a case where the coating amount is 4.0 g/m² or less, image reproducibility and sensitivity are excellent.

In addition, the coating amount after drying of the upper layer component is preferably in a range of 0.05 to 1.0 g/m² and more preferably in a range of 0.08 to 0.7 g/m². In a case where the coating amount is 0.05 g/m² or greater, development latitude and scratch resistance are excellent, and in a case where the coating amount is 1.0 g/m² or less, sensitivity is excellent.

The coating amount after drying of the underlayer and the upper layer is preferably in a range of 0.6 to 4.0 g/m² and more preferably in a range of 0.7 to 2.5 g/m². In a case where the coating amount is 0.6 g/m² or greater, printing durability is excellent, and in a case where the coating amount is 4.0 g/m² or less, image reproducibility and sensitivity are excellent.

### <Upper layer>

The upper layer of the positive type planographic printing plate precursor having a two-layer structure according to the present disclosure may be a layer that contains a phenol compound containing a phenolic hydroxyl group and a substituent represented by -CH₂OR in a molecule and having a molecular weight of 200 to 2000, a polymer having any one or both of a urea bond and a urethane bond in a main chain, and the infrared absorbent, but may be a layer formed of other components.

It is preferable that the upper layer of the positive type planographic printing plate precursor having a two-layer structure according to the present disclosure is an infrared sensitive positive type image recording layer in which the solubility in an alkali aqueous solution is improved by heat.

The mechanism of improving the solubility in alkali aqueous solution by heat in the upper layer is not particularly limited, and any one can be used as long as it includes a binder resin and improves the solubility of the heated region. As the heat used in image formation, the heat generated in a case where the underlayer including an infrared absorbent is exposed is exemplified.

Preferable examples of the upper layer of which the solubility in an alkali aqueous solution is improved by heat include a layer including an alkali-soluble resin having a hydrogen-bonding capacity such as novolac or urethane, a layer including a water-insoluble and alkali-soluble resin and a compound having a dissolution suppressing action, and a layer including an ablation-possible compound.

In addition, by further adding an infrared absorbent to the upper layer, the heat generated from the upper layer can also be used in image formation. Preferable examples of the constitution of the upper layer including an infrared absorbent include a layer including an infrared absorbent, a water-insoluble and alkali-soluble resin, and a compound having a dissolution suppressing action, and a layer including an infrared absorbent, a water-insoluble and alkali-soluble resin, and an acid generator.

### [Water-insoluble and alkali-soluble resin]

The upper layer according to the present disclosure preferably contains a water-insoluble and alkali-soluble resin. By containing the water-insoluble and alkali-soluble resin, an interaction is formed between the polar groups of the infrared absorbent and the water-insoluble and alkali-soluble resin, and a layer having a positive type photosensitivity is formed.

Typical water-insoluble and alkali-soluble resins will be described below in detail, and among these, a polyamide resin, an epoxy resin, a polyacetal resin, an acrylic resin, a methacrylic resin, a polystyrene-based resin, and a novolac-type phenolic resin are preferably exemplified.

The water-insoluble and alkali-soluble resin which can be used in the present disclosure is not particularly limited as long as it has a characteristic of being dissolved by contact with an alkali developer, and a homopolymer containing an acidic group in any one or both of the main chain and a side chain in the polymer, a copolymer thereof, or a mixture thereof is preferable.

Such a water-insoluble and alkali-soluble resin having an acidic group preferably has a functional group such as a phenolic hydroxyl group, a carboxy group, a sulfonic acid group, a phosphoric acid group, a sulfonamide group, or an active imide group. Therefore, such a resin can be suitably produced by copolymerizing a monomer mixture including one or more ethylenically unsaturated monomers having a functional group described above. As the ethylenically unsaturated monomer having a functional group described above, in addition to acrylic acid and methacrylic acid, a compound represented by the following formula and a mixture thereof can be preferably exemplified. Moreover, in the following formula, R⁴⁰ represents a hydrogen atom or a methyl group.

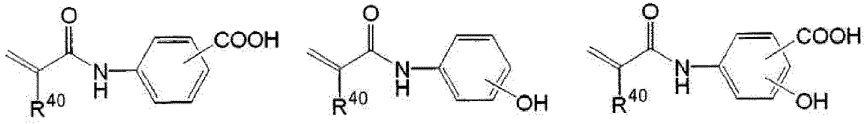

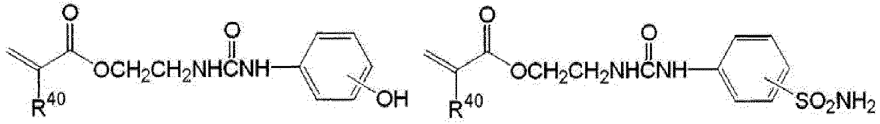

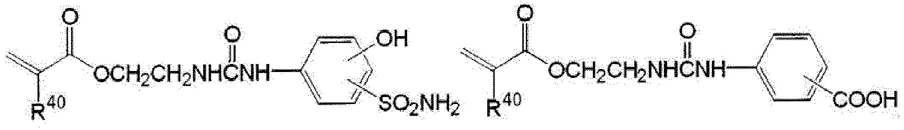

The water-insoluble and alkali-soluble resin which can be used in the present disclosure is preferably a polymer compound obtained by copolymerizing another polymerizable monomer in addition to the above-mentioned polymerizable monomers. As the copolymerization ratio in this case, a monomer imparting alkali-solubility such as a monomer having a functional group such as a phenolic hydroxyl group, a carboxy group, a sulfonic acid group, a phosphoric acid group, a sulfonamide group, or an active imide group is preferably included in 10% by mole or greater, and more preferably included in 20% by mole or greater. In a case where the copolymerization component of the monomer imparting alkali-solubility is 10% by mole or greater, sufficient alkali-solubility is obtained, and developability is excellent.

Examples of other usable polymerizable monomers include compounds exemplified below.

Alkyl acrylates or alkyl methacrylates such as methyl acrylate, ethyl acrylate, propyl acrylate, benzyl acrylate, methyl methacrylate, ethyl methacrylate, cyclohexyl methacrylate, and benzyl methacrylate. Acrylic acid esters or methacrylic acid esters having an aliphatic hydroxyl group such as 2-hydroxyethyl acrylate and 2-hydroxyethyl methacrylate. Acrylamides or methacrylamides such as acrylamide, methacrylamide, N-methylacrylamide, N-ethylacrylamide, and N-phenylacrylamide. Vinyl esters such as vinyl acetate, vinyl chloroacetate, vinyl butyrate, and vinyl benzoate. Styrenes such as styrene, α-methylstyrene, methylstyrene, and chloromethylstyrene. Other nitrogen atom-containing monomers such as N-vinyl pyrrolidone, N-vinyl pyridine, acrylonitrile, and methacrylonitrile. Maleimides such as N-methylmaleimide, N-ethylmaleimide, N-propylmaleimide, N-butylmaleimide, N-phenylmaleimide, N-2-methylphenylmaleimide, N-2,6-diethylphenylmaleimide, N-2-chlorophenylmaleimide, N-cyclohexylmaleimide, N-laurylmaleimide, and N-hydroxyphenylmaleimide.

Among these other ethylenically unsaturated monomers, (meth)acrylic acid esters, (meth)acrylamides, maleimides, or (meth)acrylonitrile is suitably used.

In addition, as the alkali-soluble resin, a phenol resin having a weight-average molecular weight of greater than 2000 described as an optional component of the image recording layer according to the present disclosure is preferably exemplified.

In addition, the water-insoluble and alkali-soluble resin described above can also be used in the upper layer of the image recording layer.

Furthermore, in the upper layer of the present disclosure, other resins can be used in combination within a range not impairing the effects of the planographic printing plate precursor according to the present disclosure. Since the upper layer is required to express alkali-solubility, in particular, in a non-image area region, it is necessary to select a resin which does not impair this characteristic. From this viewpoint, as a resin usable in combination, a water-insoluble and alkali-soluble resin is exemplified. General water-insoluble and alkali-soluble resin will be described below in detail, and among these, a polyamide resin, an epoxy resin, a polyacetal resin, an acrylic resin, a methacrylic resin, a polystyrene-based resin, and a novolac-type phenolic resin are preferably exemplified.

In addition, the amount to be mixed is preferably 50% by mass or less with respect to the water-insoluble and alkali-soluble resin.

The water-insoluble and alkali-soluble resin preferably has a weight-average molecular weight of 2,000 or greater and a number average molecular weight of 500 or greater, and more preferably has a weight-average molecular weight of 5,000 to 300,000 and a number average molecular weight of 800 to 250,000. The dispersity (weight-average molecular weight/number average molecular weight) of the alkali-soluble resin is preferably in a range of 1.1 to 10.

The water-insoluble and alkali-soluble resin may be used alone or in combination of two or more types thereof.

The content of the alkali-soluble resin with respect to the total mass of the solid content in upper layer of the present disclosure is preferably in a range of 2.0% to 99.5% by mass, more preferably in a range of 10.0% to 99.0% by mass, and still more preferably in a range of 20.0% to 90.0% by mass. In a case where the content of the alkali-soluble resin is 2.0% by mass or greater, the durability of the image recording layer (photosensitive layer) is excellent, and in a case where the content of the alkali-soluble resin is 99.5% by mass or less, both the sensitivity and the durability are excellent.

### [Infrared absorbent]

The upper layer may contain an infrared absorbent.

The infrared absorbent is not particularly limited as long as it is a dye which generates heat by absorbing infrared light, and the infrared absorbent used in the positive type planographic printing plate precursor according to the present disclosure, described above, can also be used.

A particularly preferable dye is the cyanine dye represented by Formula a.

In a case where the upper layer contains an infrared absorbent, a positive type planographic printing plate precursor having excellent image forming properties is obtained.

The content of the infrared absorbent in the upper layer is preferably in a range of 0.01% to 50% by mass, more preferably in a range of 0.1% to 30% by mass, and particularly preferably in a range of 1.0% to 10% by mass, with respect to the total mass of the solid content in the upper layer. In a case where the content thereof is 0.01% by mass or greater, the sensitivity is improved, and in a case where the addition amount is 50% by mass or less, the uniformity of the layer is excellent and the durability of the layer is excellent.

### [Other components]

In addition, the upper layer of the positive type planographic printing plate precursor having a two-layer structure may include an acid generator, an acid proliferation agent, a development accelerator, a surfactant, a print-out agent/colorant, a plasticizer, or a wax agent.

As these components, respective components used in the positive type planographic printing plate precursor according to the present disclosure, described above, can also be used, and preferred aspects thereof are also the same.

### <Underlayer>

It is preferable that the underlayer of the positive type planographic printing plate precursor having a two-layer structure in the present disclosure contains a phenol compound containing a phenolic hydroxyl group and a substituent represented by -CH₂OR in a molecule and having a molecular weight of 200 to 2000, a polymer having any one or both of a urea bond and a urethane bond in the main chain, and an infrared absorbent.

According to the aspect, a printing plate with excellent image forming properties and printing durability can be obtained.

Further, according to the aspect of the present disclosure, the printing durability is improved particularly in a case where materials such as low-quality ink or paper are used.

The detailed mechanism by which the effects as described above are obtained is unclear, but it is assumed that for the printing durability in printing, the film hardness of the resin used in the underlayer is important, and thus, it is assumed that, since a crosslinked structure is formed between binders, the printing durability is improved in a case where the underlayer contains a phenol compound containing a phenolic hydroxyl group and a substituent represented by -CH₂OR in a molecule and having a molecular weight of 200 to 2000, a polymer having any one or both of a urea bond and a urethane bond in the main chain, and an infrared absorbent.

In a case where the upper layer in the positive type planographic printing plate precursor according to the present disclosure contains a phenol compound containing a phenolic hydroxyl group and a substituent represented by -CH₂OR in a molecule and having a molecular weight of 200 to 2000, a polymer having any one or both of a urea bond and a urethane bond in the main chain, and an infrared absorbent, it is preferable that the underlayer also contains a phenol compound containing a phenolic hydroxyl group and a substituent represented by -CH₂OR in a molecule and having a molecular weight of 200 to 2000, a polymer having any one or both of a urea bond and a urethane bond in the main chain, and an infrared absorbent, but the underlayer may be formed using other components. In such a case, preferred aspects of the underlayer are the same as those of the upper layer described above.

### <Support>

The support used in the positive type planographic printing plate precursor according to the present disclosure is not particularly limited as long as it is a dimensionally stable plate-shaped material having necessary strength and durability, and examples thereof include paper, paper on which plastic (for example, polyethylene, polypropylene, and polystyrene) has been laminated, a metal plate (for example, aluminum, zinc, and copper), a plastic film (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinyl acetal), and paper or a plastic film on which the above-described metals have been laminated or vapor-deposited.

Moreover, as the support used in the present disclosure, a polyester film or an aluminum plate is preferable. Among these, the aluminum plate which has excellent dimensional stability and is relatively inexpensive is particularly preferable. A suitable aluminum plate is a pure aluminum plate or an alloy plate which has aluminum as the main component and includes a small amount of other elements, or may be a plastic film on which aluminum has been laminated or vapor-deposited. Examples of other elements included in the aluminum alloy include silicon, iron, manganese, copper, magnesium, chromium, zinc, bismuth, nickel, and titanium. The content of other elements in the alloy is preferably 10% by mass or less.

Although particularly suitable aluminum in the present disclosure is pure aluminum, it is difficult to produce completely pure aluminum on refining technique, and thus, other elements may be slightly contained.

The composition of the aluminum plate used in the present disclosure as described above is not particularly limited, and aluminum plates formed of known and used materials in the related art can be appropriately used. The thickness of the aluminum plate used in the present disclosure is preferably in a range of 0.1 to 0.6 mm, more preferably in a range of 0.15 to 0.4 mm, and particularly preferably in a range of 0.2 to 0.3 mm.

Such an aluminum plate may be subjected to a surface treatment such as a surface-roughening treatment and an anodization treatment, as necessary. As the surface treatment of the aluminum support, for example, a degreasing treatment with a surfactant, an organic solvent, or an alkali aqueous solution, a roughening treatment of a surface, an anodization treatment, or the like, as described in detail in paragraphs 0167 to 0169 of JP2009-175195A, is suitably performed.

The aluminum surface on which an anodization treatment has been performed may be subjected to a hydrophilizing treatment, as necessary.

As the hydrophilizing treatment, the alkali metal silicate (for example, sodium silicate aqueous solution) method, the method of treating with potassium fluoride zirconate or polyvinylphosphonic acid, or the like, as disclosed in paragraph 0169 of 2009-175195, is used.

In addition, the supports described in JP2011-245844A can also be preferably used.

### <Undercoat layer>

The positive type planographic printing plate precursor according to the present disclosure may include an undercoat layer between the support and the image recording layer (the underlayer in a case of the positive type planographic printing plate precursor having a two-layer structure) as necessary.

As the undercoat layer component, various organic compounds can be used, and preferable examples thereof include phosphonic acids having an amino group such as carboxymethylcellulose or dextrin, an organic phosphonic acid, an organic phosphorus acid, an organic phosphinic acid, amino acids, and hydrochloride of an amine having a hydroxy group. In addition, these undercoat layer components may be used alone or in a mixture of two or more types thereof. Details of the compound used in the undercoat layer and the method of forming the undercoat layer are described in paragraphs 0171 and 0172 of JP2009-175195A, and those described here are also applied to the present disclosure.

The coating amount of the organic undercoat layer is preferably in a range of 2 to 200 mg/m² and more preferably in a range of 5 to 100 mg/m². In a case where the coating amount is in the above-described range, sufficient printing durability is obtained.

### <Back coat layer>

A back coat layer is provided on the rear surface of the support of the positive type planographic printing plate precursor according to the present disclosure, as necessary. As the back coat layer, coating layers formed of an organic polymer compound described in JP1993-45885A (JP-H05-45885A) or a metal oxide obtained by hydrolyzing and polycondensing an organic or inorganic metal compound described in JP1994-35174A (JP-H06-35174A) are preferably used. Among these coating layers, alkoxy compounds of silicon such as Si(OCH₃)₄, Si(OC₂H₅)₄, Si(OC₃H₇)₄, and Si(OC₄H₉)₄ are easily available at low cost, and coating layers of metal oxides obtained from these have excellent developer resistance, and thus, these are particularly preferable.

### (Method of producing planographic printing plate)

A method of producing the planographic printing plate according to the present disclosure includes an exposure step of image-exposing the positive type planographic printing plate precursor according to the present disclosure; and a development step of performing development on the exposed positive type planographic printing plate precursor using an alkali aqueous solution having a pH of 8.5 to 13.5, in this order.

According to the method of producing the planographic printing plate according to the present disclosure, the printing durability and the chemical resistance become excellent, and particularly the printing durability and the chemical resistance after the burning treatment become excellent.

Hereinafter, each step of preparation method according to the present disclosure will be described in detail.

### <Exposure step>

The method of producing the planographic printing plate according to the present disclosure includes an exposure step of image-exposing the positive type planographic printing plate precursor according to the present disclosure.

As a light source of active light used in image exposure of the positive type planographic printing plate precursor of the present disclosure, a light source having an emission wavelength in the near infrared region to the infrared region is preferable, and solid-state laser or semiconductor laser is more preferable. Among these, in the present disclosure, it is particularly preferable that image exposure is performed by solid-state laser or semiconductor laser emitting infrared rays having a wavelength of 750 to 1,400 nm.

The output of the laser is preferably 100 mW or greater, and to shorten the exposure time, a multibeam laser device is preferable used. In addition, the exposure time per pixel is preferably within 20 µ seconds.

Energy with which the positive type planographic printing plate precursor according to the present disclosure is irradiated is preferably in a range of 10 to 300 mJ/cm². In a case where the energy is in the above-described range, the laser ablation is suppressed, and thus, it is possible to prevent an image from being damaged.

In the exposure according to the present disclosure, it is possible to expose by overlapping a light beam of the light source. The overlapping means that the sub-scanning pitch width is smaller than the beam diameter. For example, when the beam diameter is expressed by the half width (FWHM) of the beam intensity, the overlapping can be quantitatively expressed by FWHM/sub-scanning pitch width (overlap coefficient). In the present disclosure, this overlap coefficient is preferably 0.1 or greater.

The scanning method of the light source of an exposure apparatus which can be used in the present disclosure is not particularly limited, and a drum outer surface scanning method, a drum inner surface scanning method, a planar scanning method, or the like can be used. In addition, the channel of the light source may be a single channel or a multichannel, and in the case of drum outer surface scanning method, the multichannel is preferably used.

### <Development step>

The method of producing the planographic printing plate according to the present disclosure includes a development step of performing development on the exposed printing plate precursor using an alkali aqueous solution with a pH of 8.5 to 13.5 (hereinafter, also referred to as a "developer").

It is preferable that the developer used in the development step has a pH of 12.5 to 13.5.

Further, it is preferable that the developer contains a surfactant and more preferable that the developer contains at least an anionic surfactant or a nonionic surfactant. A surfactant contributes to improvement of processability.

As the surfactant used in the developer, any of an anionic surfactant, a nonionic surfactant, a cationic surfactant, and an amphoteric surfactant can be used, and as described above, an anionic surfactant or a nonionic surfactant is preferable.

As the anionic surfactant, the nonionic surfactant, the cationic surfactant, and the amphoteric surfactant used in the developer of the present disclosure, the surfactants described in paragraphs 0128 to 0131 of JP2013-134341A can be used.

In addition, from the viewpoint of stable solubility or turbidity in water, a surfactant preferably has a HLB value of 6 or greater and more preferably has a HLB value of 8 or greater.

As the surfactant used in the developer, an anionic surfactant or a nonionic surfactant is preferable, and an anionic surfactant containing sulfonic acid or sulfonate or a nonionic surfactant having an aromatic ring and an ethylene oxide chain is particularly preferable.

The surfactant can be used alone or in combination of two or more types thereof.

The content of the surfactant in the developer is preferably in a range of 0.01% to 10% by mass, and more preferably in a range of 0.01% to 5% by mass.

In a case where as a buffer, carbonate ions and hydrogencarbonate ions are included to maintain the pH of the developer at 8.5 to 13.5, it is possible to suppress variations in pH even in a case where the developer is used for a long period of time, and it is possible to suppress developability deterioration and a development scum occurrence due to the variation in pH. To make carbonate ions and hydrogencarbonate ions present in the developer, carbonate and hydrogencarbonate may be added to the developer, or by adjusting the pH after carbonate or hydrogencarbonate is added, carbonate ions and hydrogencarbonate ions may be generated. Although carbonate and hydrogencarbonate are not particularly limited, an alkali metal salt is preferable. Examples of the alkali metal include lithium, sodium, and potassium, and sodium is particularly preferable. These may be used alone or in combination of two or more types thereof.

The total amount of carbonate and hydrogencarbonate is preferably in a range of 0.3% to 20% by mass, more preferably in a range of 0.5% to 10% by mass, and particularly preferably in a range of 1% to 5% by mass, with respect to the total mass of the developer. In a case where the total amount is 0.3% by mass or greater, developability and processing capability are not reduced, and in a case where the total amount is 20% by mass or less, a precipitate or a crystal is less likely to be produced and at the time of the waste liquid treatment of the developer, gelation when neutralizing is less likely to occur, and thus, trouble does not occur in the waste liquid treatment.

In addition, for the purpose of finely adjusting the alkali concentration or assisting dissolution of the non-image area image recording layer, supplementarily, other alkali agents, for example, organic alkali agents may be used in combination. Examples of the organic alkali agent include monomethylamine, dimethylamine, trimethylamine, monoethylamine, diethylamine, triethylamine, monoisopropylamine, diisopropylamine, triisopropylamine, n-butylamine, monoethanolamine, diethanolamine, triethanolamine, monoisopropanolamine, diisopropanolamine, ethyleneimine, ethylenediamine, pyridine, and tetramethylammonium hydroxide. Other alkali agents are used alone or in combination of two or more types thereof.

In addition to the above materials, the developer may contain a wetting agent, a preservative, a chelate compound, an antifoaming agent, an organic acid, an organic solvent, an inorganic acid, an inorganic salt, or the like. In a case where a water-soluble polymer compound is added, in particular, when the developer was fatigued, the plate surface is likely to be sticky, and thus, a water-soluble polymer compound is preferably not added.

As the wetting agent, the wetting agents described in paragraph 0141 of JP2013-134341A can be suitably used. The wetting agent may be used alone or in combination of two or more types thereof. The wetting agent is preferably used in an amount of 0.1% to 5% by mass with respect to the total mass of the developing agent.

As the preservative, the preservatives described in paragraph 0142 of JP2013-134341A can be suitably used. Two or more preservatives are preferably used in combination such that the preservatives have effect of sterilization of various molds. The content of the preservative is an amount in which the effect is stably exhibited on bacteria, fungi, yeast or the like, and although the addition amount varies depending on the type of bacteria, molds, or yeast, the addition amount is preferably in a range of 0.01% to 4% by mass with respect to the total mass of the developer.

As the chelate compound, the chelate compounds described in paragraph 0143 of JP2013-134341A can be suitably used. As the chelating agent, a chelating agent which is stably present in the developer composition and does not impair the printability is selected. The content thereof is suitably in a range of 0.001% to 1.0% by mass with respect to the total mass of the developer.

As the antifoaming agent, the antifoaming agents described in paragraph 0144 of JP2013-134341A can be suitably used. The content of the antifoaming agent is suitably in a range of 0.001% to 1.0% by mass with respect to the total mass of the developer.

As the organic acid, the antifoaming agents described in paragraph 0145 of JP2013-134341A can be suitably used. The content of the organic acid is preferably in a range of 0.01% to 0.5% by mass with respect to the total mass of the developer.

Examples of the organic solvent include aliphatic hydrocarbons (hexane, heptane, "Isopar E, H, G" (manufactured by Exxon Chemical Company), gasoline, kerosene, and the like), aromatic hydrocarbons (toluene, xylene, and the like), halogenated hydrocarbons (methylene dichloride, ethylene dichloride, trichlene, monochlorobenzene, and the like), and polar solvents.

Examples of the polar solvent include alcohols (methanol, ethanol, propanol, isopropanol, benzyl alcohol, ethylene glycol monomethyl ether, 2-ethoxyethanol, and the like), ketones (methyl ethyl ketone, cyclohexanone, and the like), esters (ethyl acetate, methyl lactate, propylene glycol monomethyl ether acetate, and the like), others (triethyl phosphate, tricresyl phosphate, N-phenylethanolamine, N-phenyldiethanolamine, and the like).

In addition, in a case where the organic solvent is insoluble in water, it is also possible to use by solubilizing the organic solvent in water using a surfactant or the like. In a case where the developer contains an organic solvent, from the viewpoint of safety and inflammability, the concentration of the solvent is preferably less than 40% by mass.

Examples of the inorganic acid and the inorganic salt include phosphoric acid, metaphosphoric acid, ammonium primary phosphate, ammonium secondary phosphate, sodium primary phosphate, sodium secondary phosphate, potassium primary phosphate, potassium secondary phosphate, sodium tripolyphosphate, potassium pyrophosphate, sodium hexametaphosphate, magnesium nitrate, sodium nitrate, potassium nitrate, ammonium nitrate, sodium sulfate, potassium sulfate, ammonium sulfate, sodium sulfite, ammonium sulfite, sodium hydrogen sulfate, and nickel sulfate. The content of the inorganic salt is preferably in a range of 0.01 % to 0.5% by mass with respect to the total mass of the developer.

The temperature for the development is not particularly limited as long as the development can be performed at the temperature, and is preferably 60°C or lower and more preferably in a range of 15°C to 40°C. In the development treatment using an automatic developing device, the developer becomes fatigued according to the treatment amount, and thus the processing capability may be restored using a replenisher or a fresh developer. By automatically setting the reference electric conductivity that determines the timing for replenishing the development replenisher to a suitable value in consideration of the ratio between the processing fatigue and the carbon dioxide gas fatigue using an automatic developing device as described in JP1997-96910A (JP-H09-96910A), the activity of the developer may be maintained in an excellent state for a long period of time.

As one example of the development or the treatment after the development, a method of performing alkali development, removing the alkali in a post-water washing step, performing a gum treatment in a gumming step, and drying in a drying step can be exemplified. In addition, as another example, a method of performing pre-water washing, developing, and gumming at the same time by using an aqueous solution containing carbonate ions, hydrogencarbonate ions, and a surfactant can be preferably exemplified. Thus, particularly, the pre-water washing step may not be performed, and only by using one solution, pre-water washing, developing, and gumming are performed in one bath, and then, a drying step may be preferably performed. After the development, it is preferable that drying is performed after the excess developer is removed using a squeeze roller or the like. In a case where an unnecessary image area is present in the obtained planographic printing plate, the unnecessary image area is removed. For removal, for example, a method of removing the unnecessary image area by coating the area with an erasing solution, allowing the area to stand for a predetermined time, and washing the area with water, as described in JP1990-13293B (JP-H02-13293B), is preferable, and a method of irradiating the unnecessary image area with active rays guided by optical fibers and performing development as described in JP1993-174842A (JP-H05-174842A) can also be used.

The development step can be suitably performed by an automatic treatment device equipped with a rubbing member. Examples of the automatic treatment device include an automatic treatment device which performs a rubbing treatment while transporting the positive type planographic printing plate precursor after image exposure, described in JP1990-220061A (JP-H02-220061A) and JP1985-59351A (JP-S60-59351A), and an automatic treatment device which performs a rubbing treatment on the positive type planographic printing plate precursor after image exposure, set on a cylinder while rotating the cylinder, described in US5148746A, US5568768A, and GB2297719B. Among these, as the rubbing member, an automatic treatment device using a rotating brush roll is particularly preferable.

The rotating brush roll used in the present disclosure can be suitably selected in consideration of the difficulty in flawing of the image area and the stiffness of the support of the positive type planographic printing plate precursor. As the rotating brush roll, a known rotating brush roll formed by implanting a brush material into a plastic or metal roll can be used. For example, the brush rolls described in JP1983-159533A (JP-S58-159533A) or JP1991-100554A (JP-H03-100554A) or a brush roll formed by closely and radially wrapping a metal or plastic grooved material into which a brush material has been implanted in a row on a plastic or metal roll which becomes a core, as described in JP1987-167253Y (JP-S62-167253Y), can be used.

As the brush material, plastic fibers (for example, polyester-based synthetic fibers such as polyethylene terephthalate and polybutylene terephthalate, polyamide-based synthetic fibers such as nylon 6.6 and nylon 6.10, polyacryl-based synthetic fibers such as polyacrylonitrile and alkyl poly(meth)acrylate, and polyolefin-based synthetic fibers such as polypropylene and polystyrene) can be used, and for example, a plastic fiber having a diameter of a fiber hair of 20 to 400 µm and a length of a hair of 5 to 30 mm can be suitably used.

The outer diameter of the rotating brush roll is preferably in a range of 30 to 200 mm, and the circumferential speed of the front end of the brush rubbing the plate surface is preferably in a range of 0.1 to 5 m/sec. A plurality of the rotating brush rolls is preferably used.

Although the rotation direction of the rotating brush roll may be the same direction or may be the reverse direction, with respect to the transporting direction of the positive type planographic printing plate precursor, in a case where two or more rotating brush rolls are used, it is preferable that at least one rotating brush roll rotates in the same direction and at least one rotating brush roll rotates in the reverse direction. Thus, removal of the image recording layer of the non-image area becomes more reliable. Furthermore, it is also effective to swing the rotating brush roll in the rotation axis direction of the brush roll.

After the development step, a continuous or discontinuous drying step is preferably performed. Drying is performed by hot air, infrared rays, or far infrared rays.

According to the method of producing the planographic printing plate of the present disclosure, an automatic treatment device that performs development and gumming on the positive type planographic printing plate precursor in a developer tank and drying the positive type planographic printing plate precursor in a drying portion to obtain a planographic printing plate may be used.

### <Heat treatment (burning treatment) step>

It is preferable that the method of producing the planographic printing plate according to the present disclosure includes a heat treatment step of heating the planographic printing plate precursor in a temperature range of 150°C to 350°C after the development step.

The heat treatment is also referred to as a burning treatment, and the heat treatment step is also referred to as a burning treatment step.

It is preferable that the burning treatment is performed by heating the planographic printing plate precursor in a temperature range of 150°C to 350°C using a burning processor (for example, a burning processor "BP-1300" sold by Fujifilm Corporation) or the like.

The heating temperature is in a range of 150°C to 350°C, more preferably in a range of 160°C to 300°C, and still more preferably in a range of 180°C to 270°C. Further, the heating time is preferably in a range of 1 minute to 20 minutes, more preferably in a range of 1 minute to 15 minutes, and still more preferably in a range of 1 minute to 10 minutes.

Optimal conditions for the heating temperature and the heating time are selected in consideration of the type of the component forming an image.

In a case of the burning treatment, it is preferable that a treatment is performed using a surface cleaning liquid as described in JP1986-2518B (JP-S61-2518B), JP1980-28062B (JP-S55-28062B), JP1987-31859A (JP-S62-31859A), and JP1986-159655A (JP-S61-159655A) before the burning treatment. Examples of the treatment method include a method of coating the planographic printing plate with a surface cleaning liquid using a sponge or absorbent cotton impregnated with the surface cleaning liquid, a method of immersing a printing plate in a vat filled with a surface cleaning liquid to coat the printing plate with the surface cleaning liquid, and a method of coating the printing plate using an automatic coater. Further, in a case where the coating amount thereof is made uniform using a squeegee or a squeegee roller after the coating, more preferable effects can be obtained.

The coating amount of the surface cleaning liquid is appropriately in a range of 0.03 to 0.8 g/m² (dry mass).

The planographic printing plate which has been subjected to the burning treatment can be appropriately further subjected to a treatment such as washing with water or gumming, which has been performed in the related art, as necessary. However, in a case where a surface cleaning liquid containing a water-soluble polymer compound or the like is used, a so-called desensitizing treatment such as gumming can be omitted.

The planographic printing plate obtained by performing such a treatment is provided for an offset printer or the like and used for printing a plurality of sheets.

### Examples

Hereinafter, the present invention will be described in detail using examples, but the present invention is not limited thereto. Moreover, "part" and "%" in the following examples respectively represent "part(s) by mass" and "% by mass" unless otherwise specified.

Further, phenol compounds C-1 to C-9 containing a phenolic hydroxyl group and a substituent represented by -CH2OR in a molecule, used in the examples, and having a molecular weight of 200 to 2000 are the same as the compounds represented by Formulae C-1 to C-9 described in the specific examples above.

### <Synthesis of polyurea resin (PU-1)>

The synthesis was performed according to the same method as in the synthesis example of the polyurea resin described in paragraph 0221 of WO2015/152209A except that 1,3-bis(isocyanatomethyl)cyclohexane (manufactured by Tokyo Chemical Industry Co., Ltd.) was used in place of hexamethylene diisocyanate. The weight-average molecular weight thereof was 55000.

It was confirmed that whether the obtained product was the target substance based on the NMR (nuclear magnetic resonance) spectrum, the infrared spectroscopy (IR) spectrum, and GPC (in terms of polystyrene). The structure of PU-1 is as shown below.

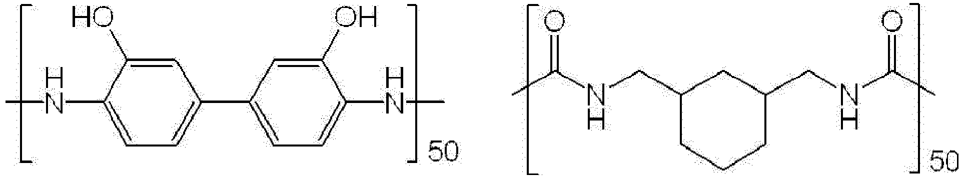

### <Synthesis of polyurea resin (PU-2)>

### [Synthesis of sulfonamide-containing diamine (SA-1)]

139.82 g of chlorosulfonic acid was weighed in a three-neck flask provided with a condenser and a stirrer, 29.43 g of xanthone (manufactured by Tokyo Chemical Industry Co., Ltd.) was added thereto at room temperature, and the resulting solution was stirred at room temperature for 1 hour. The temperature of the reaction solution was raised to 80°C, and the reaction solution was stirred for 8 hours. This reaction solution was cooled to room temperature while being stirred, and crystallized in 2 L of ice-cold water, followed by stirring for 10 minutes. This was collected by filtration, and the collected product was dissolved in 3 L of ethyl acetate. This ethyl acetate solution was transferred to a separating funnel, washing with pure water and liquid-liquid separation was performed two times, and washing with saturated saline and liquid-liquid separation was performed. After the organic layer was transferred to an Erlenmeyer flask, 30 g of magnesium sulfate was added thereto, followed by stirring, the solid content was removed by filtration, the ethyl acetate was distilled off using an evaporator, and the resulting product was vacuum-dried at 40°C for 24 hours, whereby 28 g of a precursor S-1 (disulfonic acid chloride) which was a target substance was obtained. It was confirmed from the NMR spectrum that the obtained product was the precursor (S-1). The precursor S-1 was analyzed using ¹NMR. The result thereof is shown below.
¹NMR data (deuterated dimethyl sulfoxide, 400 MHz, internal standard: tetramethylsilane)
δ (ppm) = 7.62-7.65 (d, 2H), 8.02-8.05 (d, 2H), 8.40 (s, 2H)

32.44 g of 1,4-phenylenediamine (manufactured by Tokyo Chemical Industry Co., Ltd.) and 170 g of tetrahydrofuran were weighed in a three-neck flask provided with a condenser and a stirrer, and the resulting mixture was stirred while being cooled to 0°C to 5°C. After 19.66 g of the precursor (S-1) obtained in the above-described manner was dissolved in 170 g of tetrahydrofuran, the solution was transferred to a dropping funnel, added dropwise to the three-neck flask for 1 hour during stirring, and stirred for 1 hour. After the temperature of the reaction solution was returned to room temperature and the reaction solution was stirred for 2 hours, 205.0 g of a 1 N sodium hydroxide aqueous solution was added to the reaction solution and then 150 g of pure water was added thereto and dissolved therein. The reaction solution was transferred to a separating funnel and washed with 300 mL of ethyl acetate three times, and then the water layer was recovered. Next, an aqueous solution obtained by dissolving 11.10 g of ammonium chloride (manufactured by Kanto Chemical Co., Inc.) in 500 mL of pure water was stirred, the water layer was added dropwise using a dropping funnel, and crystals were filtered. The filtrate was washed with 500 mL of pure water, washed with 500 mL of hexane, and filtered, thereby obtaining crystals. The crystals were vacuum-dried at 40°C for 24 hours, whereby 20.1 g of a target substance (SA-1) was obtained. It was confirmed from the NMR spectrum that the obtained product was the target substance.

The target substance (SA-1) was analyzed using ¹NMR. The result thereof is shown below.
¹NMR data (deuterated DMSO, 400 MHz, internal standard: tetramethylsilane)
δ (ppm) = 4.63 (s, 4H), 6.36-6.38 (d, 4H), 6.67-6.69 (d, 4H), 7.81-7.83 (d, 2H), 7.99-8.01 (d, 2H), 8.43 (s, 2H), 9.66 (s-2H)

### [Synthesis of PU-2]

42.93 g of SA-1, 0.027 g of aniline (manufactured by Wako Pure Chemical Industries, Ltd.), and 169.16 g of N,N-dimethylacetamide (manufactured by Kanto Chemical Co., Inc.) were weighed in a three-neck flask provided with a condenser and a stirrer, and the temperature of the reaction solution was set to room temperature to obtain a uniform solution. Next, 13.45 g of hexamethylene diisocyanate (manufactured by Tokyo Chemical Industry Co., Ltd.) was added dropwise using a dropping funnel at room temperature for 15 minutes, the resulting solution was stirred at room temperature for 30 minutes for a reaction, and the reaction solution was heated to 60°C and stirred for 3 hours. Subsequently, 1.00 g of aniline (manufactured by Wako Pure Chemical Industries, Ltd.) and 50 mL of methanol were added to the reaction solution, and the resulting solution was allowed to react at 60°C for 1 hour and then cooled to room temperature.

The reaction solution was poured into a mixed solution of 2 L of pure water and 2 L of methanol, and then a polymer was precipitated. The resultant was collected by filtration, washed, and dried, thereby obtaining 51.9 g of a binder polymer (PU-2) having a weight-average molecular weight of 56,000.

It was confirmed that whether the obtained product was the target substance based on the NMR spectrum, the IR spectrum, and GPC (in terms of polystyrene).

Further, the structure of PU-2 is as shown below.

The numerical values on the lower right side of the parentheses respectively represent a containing ratio (molar ratio) of each constitutional unit.

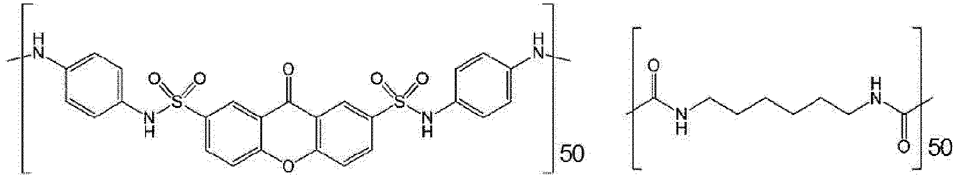

### <Synthesis of polyurea resin (PU-3)>

### [Synthesis of sulfonamide-containing diamine (SA-18)]

36.06 g of ethylenediamine (manufactured by Tokyo Chemical Industry Co., Ltd.) and 40 g of tetrahydrofuran were weighed in a three-neck flask provided with a condenser and a stirrer, and the resulting mixture was stirred while being cooled to 0°C to 5°C. 11.79 g of the precursor (S-1) obtained in the above-described manner was dissolved in 66 g of tetrahydrofuran, the solution was transferred to a dropping funnel, added dropwise to the three-neck flask for 1 hour during stirring, and stirred for 1 hour after the dropwise addition. When the temperature of the reaction solution was returned to room temperature and the reaction solution was stirred for 2 hours, since the solid component and the liquid component were separated from each other, the liquid component was decanted. Next, the solid component in the flask was dissolved in 150 g of N,N-dimethylacetamide (manufactured by Kanto Chemical Co., Ltd.) and 20 g of pure water and crystallized in 2 L of an aqueous solution in which 20 g of sodium hydrogen carbonate was dissolved, and then the resultant was filtered. The filtrate was washed with 500 mL of pure water, washed with 500 mL of tetrahydrofuran, and filtered, thereby obtaining crystals. The crystals were vacuum-dried at 60°C for 24 hours, whereby 10.1 g of a target substance (SA-18) was obtained. It was confirmed from the NMR spectrum that the obtained product was the target substance.

The target substance (SA-18) was analyzed using ¹NMR. The result thereof is shown below.
¹NMR data (deuterated DMSO, 400 MHz, internal standard: tetramethylsilane)
δ (ppm) = 2.52-2.55 (t, 4H), 2.75-2.79 (t, 4H), 7.93-7.95 (d, 2H), 8.22-8.25 (d, 2H), 8.57 (s, 2H)

### [Synthesis of PU-3]

35.24 g of SA-18, 0.078 g of n-butylamine (manufactured by Wako Pure Chemical Industries, Ltd.), and 200.0 g of N,N-dimethylacetamide (manufactured by Kanto Chemical Co., Inc.) were weighed in a three-neck flask provided with a condenser and a stirrer, and the temperature of the reaction solution was set to room temperature to obtain a uniform solution. Next, 15.54 g of 1.3-bis(isocyanatomethyl)cyclohexane (manufactured by Tokyo Chemical Industry Co., Ltd.) and 80.0 g of N,N-dimethylacetamide (manufactured by Kanto Chemical Co., Inc.) were weighed and added dropwise using a dropping funnel at room temperature for 30 minutes, and the resulting solution was stirred at room temperature for 30 minutes for a reaction. Subsequently, 1.00 g of n-butylamine (manufactured by Wako Pure Chemical Industries, Ltd.) and 50 mL of methanol were added to the reaction solution, and the resulting solution was reacted at room temperature for 30 minutes.

The reaction solution was poured into a mixed solution of 2 L of pure water and 2 L of methanol, and as a result, a polymer was precipitated. The resultant was collected by filtration, washed, and dried, whereby 46.7 g of a binder polymer (PU-45) having a weight-average molecular weight of 53,000 was obtained.

It was confirmed that whether the obtained product was the target substance based on the NMR spectrum, the IR spectrum, and GPC (polystyrene conversion). In the same manner as described above, PU-45 to PU-56 can be synthesized.

Further, the structure of PU-3 is as shown below.

The numerical values on the lower right side of the parentheses respectively represent a containing ratio (molar ratio) of each constitutional unit.

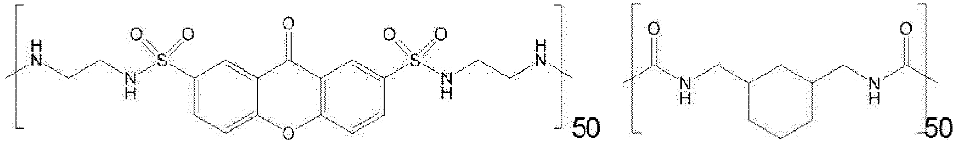

### <Synthesis of polyurethane resin (PU-4)>

### [Synthesis of sulfonamide-containing diol (SB-1)]

32.74 g of 4-aminophenol (manufactured by Tokyo Chemical Industry Co., Ltd.) and 170 g of tetrahydrofuran were weighed in a three-neck flask provided with a condenser and a stirrer, and the resulting mixture was stirred while being cooled to 0°C to 5°C. After 19.66 g of the precursor (S-1) obtained in the above-described manner was dissolved in 170 g of tetrahydrofuran, the solution was transferred to a dropping funnel, added dropwise to the three-neck flask for 1 hour during stirring, and stirred for 1 hour. After the temperature of the reaction solution was returned to room temperature and the reaction solution was stirred for 2 hours, 205.0 g of a 1 N sodium hydroxide aqueous solution was added to the reaction solution and then 150 g of pure water was added thereto and dissolved therein. The reaction solution was transferred to a separating funnel and washed with 300 mL of ethyl acetate three times, and then the water layer was recovered. Next, an aqueous solution obtained by dissolving 11.10 g of ammonium chloride (manufactured by Kanto Chemical Co., Inc.) in 500 mL of pure water was stirred, the water layer was added dropwise using a dropping funnel, and crystals were filtered. The filtrate was washed with 500 mL of pure water, washed with 500 mL of hexane, and filtered, thereby obtaining crystals. The crystals were vacuum-dried at 40°C for 24 hours, thereby obtaining 20.1 g of a target substance (SB-1). It was confirmed that whether the obtained product was the target substance based on the NMR spectrum.

### [Synthesis of PU-4]

44.25 g of SB-1 and 149.50 g of N,N-dimethylacetamide (manufactured by Kanto Chemical Co., Inc.) were weighed in a three-neck flask provided with a condenser and a stirrer, and the temperature of the reaction solution was set to room temperature to obtain a uniform solution. Next, 20.98 g of 1.3-bis(isocyanatomethyl)cyclohexane (manufactured by Tokyo Chemical Industry Co., Ltd.) and 0.1 g of NEOSTANN U-600 (manufactured by NITTO KASEI CO., LTD.: bismuth catalyst) were added at room temperature, the resulting solution was stirred at room temperature for 30 minutes for a reaction, and the reaction solution was heated to 70°C and stirred for 10 hours. 100.87 g of N,N-dimethylacetamide (manufactured by Kanto Chemical Co., Inc.) and 50 mL of methanol (manufactured by Wako Pure Chemical Industries, Ltd.) were added to the reaction solution, and the resulting solution was reacted at 70°C for 2 hours and then cooled to room temperature.

The reaction solution was poured into a mixed solution of 2 L of pure water and 2 L of methanol, and as a result, a polymer was precipitated. The resultant was collected by filtration, washed, and dried, whereby 61.5 g of a binder polymer (PT-2) having a weight-average molecular weight of 52,000 was obtained.

It was confirmed that whether the obtained product was the target substance based on the NMR spectrum, the IR spectrum, and GPC (polystyrene conversion).

Further, the structure of PU-4 is as shown below.

The numerical values on the lower right side of the parentheses respectively represent a containing ratio (molar ratio) of each constitutional unit.

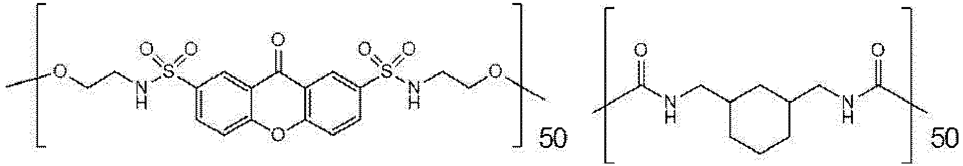

### <Synthesis of C-9>

0.175 g of sodium hydroxide was added to a mixed solution of bisphenol A (50 g) and formaldehyde (44.5 g, 37% aqueous solution), and the resulting solution was stirred at 90°C for 2 hours. This mixture was cooled to 70°C, and 0.36 g of phosphoric acid was added thereto for neutralization. Further, the mixture was distilled under reduced pressure at 80°C to remove the moisture, thereby obtaining C-9.

The weight-average molecular weight of C-9 was 800.

The structure of C-9 is as shown below.

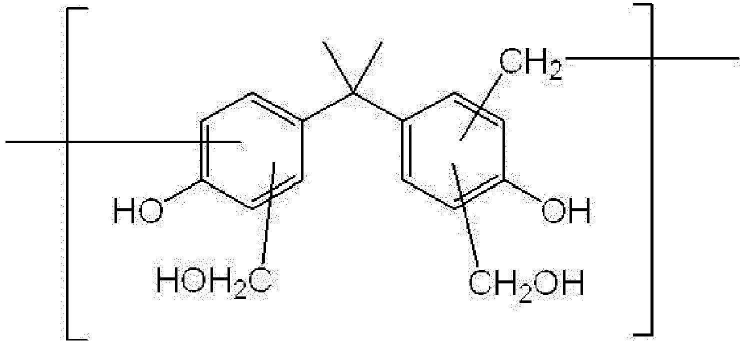

### (Examples 1 to 16 and Comparative Examples 1 to 7)

### <Preparation of support>

An aluminum alloy plate having a thickness of 0.3 mm of a material 1S was subjected to the following (a) to (k) treatments, thereby producing a support for a planographic printing plate. Moreover, during all treatment steps, a washing treatment with water was performed, and after the washing treatment with water, liquid cutting was performed using a nip roller.

### <Treatment>

### (A-a) Mechanical roughening treatment (brush grain method)

While supplying a suspension of pumice (specific gravity of 1.1 g/cm³) to the surface of an aluminum plate as a polishing slurry liquid, a mechanical roughening treatment was performed using rotating bundle bristle brushes.

The median diameter (µm) of a polishing material was 30 µm, the number of the brushes was four, and the rotation speed (rpm) of the brushes was set to 250 rpm. The material of the bundle bristle brushes was nylon 6, 10, the diameter of the brush bristles was 0.3 mm, and the bristle length was 50 mm. The brushes were produced by implanting bristles densely into the holes in a stainless steel cylinder having φ300 mm. The distance between two support rollers (φ200 mm) of the lower portion of the bundle bristle brush was 300 mm. The bundle bristle brushes were pressed until the load of a driving motor for rotating the brushes became 10 kW plus with respect to the load before the bundle bristle brushes were pressed against the aluminum plate. The rotation direction of the brushes was the same as the moving direction of the aluminum plate.

### (b) Alkali etching treatment

The aluminum plate obtained above was subjected to an etching treatment by spraying a caustic soda aqueous solution in which the concentration of caustic soda was 26% by mass and the concentration of aluminum ions was 6.5% by mass using a spray tube at a temperature of 70°C. Thereafter, washing with water by spraying was performed. The amount of aluminum dissolved was 10 g/m².

### (c) Desmutting treatment in acidic aqueous solution

Next, a desmutting treatment was performed in a nitric acid aqueous solution. As the nitric acid aqueous solution used in the desmutting treatment, the waste liquid of nitric acid used in electrochemical roughening of the next step was used. The liquid temperature was 35°C. The desmutting treatment was performed for 3 seconds by spraying the desmutting liquid using a spray.

### (d) Electrochemical roughening treatment

An electrochemical surface roughening treatment was continuously performed using an AC voltage of nitric acid electrolysis 60 Hz. As the electrolyte at this time, an electrolyte which had been adjusted to have a concentration of aluminum ions of 4.5 g/L by adding aluminum nitrate to a nitric acid aqueous solution having a concentration of 10.4 g/L at a temperature of 35°C was used. Using a trapezoidal rectangular waveform AC having a time tp until the current value reached a peak from zero of 0.8 msec and the duty ratio of 1:1 as the AC power supply waveform, the electrochemical surface-roughening treatment was performed using a carbon electrode as a counter electrode. As an auxiliary anode, ferrite was used. The current density was 30 A/dm² as the peak current value, and 5% of the current from the power source was separately flowed to the auxiliary anode. The electric quantity (C/dm²) was 185 C/dm² as the sum total of electric quantity at the time of anodization of the aluminum plate. Thereafter, washing with water by spraying was performed.

### (e) Alkali etching treatment

The aluminum plate obtained above was subjected to an etching treatment by spraying a caustic soda aqueous solution in which the concentration of caustic soda was 5% by mass and the concentration of aluminum ions was 0.5% by mass using a spray tube at a temperature of 50°C. Thereafter, washing with water by spraying was performed. The amount of aluminum dissolved was 0.5 g/m².

### (f) Desmutting treatment in acidic aqueous solution

Next, a desmutting treatment was performed in a sulfuric acid aqueous solution. As the sulfuric acid aqueous solution used in the desmutting treatment, a solution in which the concentration of sulfuric acid was 170 g/L and the concentration of aluminum ions was 5 g/L was used. The liquid temperature was 30°C. The desmutting treatment was performed for 3 seconds by spraying the desmutting liquid using a spray.

### (g) Electrochemical roughening treatment

An electrochemical surface roughening treatment was continuously performed using an AC voltage of hydrochloric acid electrolysis 60 Hz. As the electrolyte, an electrolyte which had been adjusted to have a concentration of aluminum ions of 4.5 g/L by adding aluminum chloride to a hydrochloric acid aqueous solution having a concentration of 6.2 g/L at a liquid temperature of 35°C was used. Using a trapezoidal rectangular waveform AC having a time tp until the current value reached a peak from zero of 0.8 msec and the duty ratio of 1:1, the electrochemical surface-roughening treatment was performed using a carbon electrode as a counter electrode. As an auxiliary anode, ferrite was used.

The current density was 25 A/dm² as the peak current value, and the electric quantity (C/dm²) in the hydrochloric acid electrolysis was 63 C/dm² as the sum total of electric quantity at the time of anodization of the aluminum plate. Thereafter, washing with water by spraying was performed.

### (h) Alkali etching treatment

The aluminum plate obtained above was subjected to an etching treatment by spraying a caustic soda aqueous solution in which the concentration of caustic soda was 5% by mass and the concentration of aluminum ions was 0.5% by mass using a spray tube at a temperature of 50°C. Thereafter, washing with water by spraying was performed. The amount of aluminum dissolved was 0.1 g/m².

### (i) Desmutting treatment in acidic aqueous solution

Next, a desmutting treatment was performed in a sulfuric acid aqueous solution. Specifically, the desmutting treatment was performed at a liquid temperature of 35°C for 4 seconds using the waste liquid (aluminum ions having a concentration of 5 g/L were dissolved in a sulfuric acid aqueous solution having a concentration of 170 g/L) generated in the anodization treatment step. The desmutting treatment was performed for 3 seconds by spraying the desmutting liquid using a spray.

### (j) Anodization treatment

An anodization treatment was performed using an anodization apparatus (the length of each of a first electrolytic portion and a second electrolytic portion was 6 m, the length of each of a first feeding portion and a second feeding portion was 3 m, and the length of each of a first feeding electrode and a second feeding electrode was 2.4 m) of a two-stage feeding electrolytic treatment method. As the electrolyte supplied to the first electrolytic portion and the second electrolytic portion, sulfuric acid was used. All electrolytes have a concentration of sulfuric acid of 50 g/L (including 0.5% by mass of aluminum ions) and were at a temperature of 20°C. Thereafter, washing with water by spraying was performed.

### (k) Silicate treatment

To ensure hydrophilicity of the non-image area, a silicate treatment was performed by dipping at 50°C for 7 seconds using 2.5% by mass No. 3 sodium silicate aqueous solution. The amount of Si attached was 10 mg/m². Thereafter, washing with water by spraying was performed.

### <Formation of undercoat layer>

The prepared support was coated with an undercoat layer coating solution 1 shown below, and the coating solution was dried at 80°C for 15 seconds, thereby preparing a support A provided with an undercoat layer. The coating amount after drying was 15 mg/m².

### [Undercoat layer coating solution 1]

- Following copolymer having a weight-average molecular weight of 28,000: 0.3 parts by mass
- Methanol: 100 parts by mass
- Water: 1 part by mass

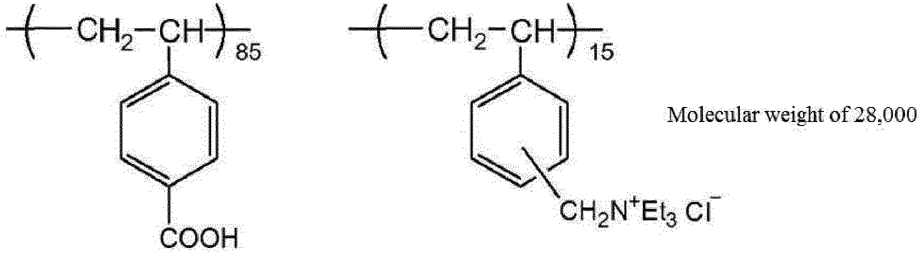

### <Formation of image recording layer>

After the support A provided with the undercoat layer obtained in the above-described manner was coated with a coating solution composition (I) for forming an underlayer having the following composition using a wire bar, and the resulting support was dried in a drying oven at 150°C for 40 seconds to obtain the coating amount listed in Table 1, whereby an underlayer was provided. After the underlayer was provided, the underlayer was coated with a coating solution composition (II) for forming an upper layer having the following composition using a wire bar, and the resulting product was dried in a drying oven at 150°C for 40 seconds to obtain a coating amount of 0.2 g/m² to provide an upper layer, thereby obtaining a positive type planographic printing plate precursor.

### [Coating solution composition (I) for forming underlayer]

- Polymer having any one or both of urea bond and urethane bond in main chain, listed in Table 1: 3.5 parts
- Phenol compound containing phenolic hydroxyl group and substituent represented by -CH₂OR in molecule and having molecular weight of 200 to 2000, listed in Table 1: the content listed in the table.

Further, as the content of the phenol compound containing a phenolic hydroxyl group and a substituent represented by -CH₂OR in a molecule and having a molecular weight of 200 to 2000, the content (% by mass) with respect to the total mass of the polymer having any one or both of a urea bond and a urethane bond in the main chain was listed in Table 1.
- m,p-Cresol novolac (m/p ratio = 6/4, weight-average molecular weight of 6000): the content listed in the table

Further, as the content of the phenol resin, the content (% by mass) with respect to the total mass of the polymer having any one or both of a urea bond and a urethane bond in the main chain was listed in Table 1.
- Infrared absorbent (IR coloring agent (1): following structure): 0.2 parts
- 4,4'-Bishydroxyphenyl sulfone: 0.3 parts
- Tetrahydrophthalic acid: 0.4 parts
- p-Toluenesulfonic acid: 0.02 parts
- 3-Methoxy-4-diazodiphenylamine hexafluorophosphate: 0.06 parts
- Product obtained by replacing a counter ion of ethyl violet with 6-hydroxynaphthalenesulfonic acid: 0.15 parts
- Fluorine-based surfactant (MEGAFAC F-780, manufactured by DIC Corporation): 0.07 parts
- Methyl ethyl ketone: 30 parts
- 1-Methoxy-2-propanol: 15 parts
- N,N-dimethylacetamide: 15 parts

### IRdye (1)

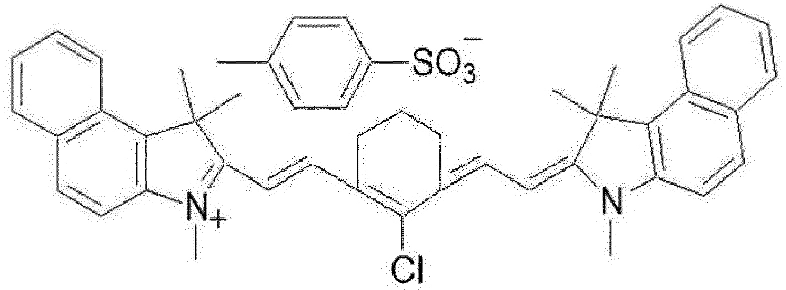

### [Coating solution composition (II) for forming upper layer]

- Novolac resin (m-cresol/p-cresol/phenol = 3/2/5, Mw of 8,000): 0.68 parts
- Infrared absorbent (IR coloring agent (1): above structure): 0.045 parts
- Fluorine-based surfactant (MEGAFAC F-780, manufactured by DIC Corporation): 0.03 parts
- Methyl ethyl ketone: 15.0 parts
- 1-Methoxy-2-propanol: 30.0 parts
- 5-Benzoyl-4-hydroxy-2-methoxybenzenesulfonate of 1-(4-methylbenzyl)-1-phenylpiperidinium : 0.01 parts

### (Evaluation)

### <Evaluation of image forming properties>

Each of the prepared positive type planographic printing plate precursors was immersed in a container into which a developer XP-D (manufactured by Fujifilm Corporation) (which was made to have a conductivity of 43 mS/cm by dilution, pH of 13.1, 30°C) while changing the time every 2 seconds and washed with water, and then the minimum time required for completely dissolving the image recording layer was acquired. The complete dissolution of the image recording layer was confirmed by measuring the concentration of the remaining exposed portion after immersion in the developer using a reflection densitometer (manufactured by GretagMacbeth Company) and matching the concentration with the concentration of only the support.

Next, the entire surface of the positive type planographic printing plate precursor was exposed at a beam intensity of 15 W and a drum rotation speed of 150 rpm using a Trendsetter VX (manufactured by Creo Company), and the time required for dissolution of the image recording layer was acquired in the same manner as described above. In a case where the dissolution time when the planographic printing plate precursor was not exposed was set as a and the dissolution time after the planographic printing plate precursor was exposed was set as b, the value of a/b was acquired and then used as the standard for evaluation of the image forming properties. As the obtained value was larger, the effect of promoting the dissolution at the time of exposure was high, the dissolution discrimination was excellent, and the image forming properties were excellent.

The results are listed in Table 1.

### <Evaluation of printing durability>

### [Exposure and development]

Drawing of a test pattern in an image shape was performed on each of the positive type planographic printing plate precursors obtained in the above-described manner using a Trendsetter (manufactured by Creo Company) at a beam intensity of 9 W and a drum rotation speed of 150 rpm. Thereafter, using PS PROCESSOR LP940H (manufactured by Fujifilm Corporation) charged with a developer XP-D (which was made to have a conductivity of 43 mS/cm by dilution, pH of 13.1) (manufactured by Fujifilm Corporation), development was performed at a developing temperature of 30°C and a development time of 12 seconds.

### [Heat treatment (burning treatment)]

In each example and each comparative example, a portion of the planographic printing plate after development was subjected to a heat treatment at 235°C for 5 minutes using a baking gum solution described below.

### [Baking gum solution]

As the baking gum solution, a baking surface cleaning liquid BC-7 (manufactured by Fujifilm Corporation) was used.

In this manner, planographic printing plates which had been subjected to the heat treatment and planographic printing plate which had not been subjected to the heat treatment were respectively obtained using the planographic printing plates of each example and each comparative example. The planographic printing plate used for evaluation in each evaluation item is listed in Table 1. The items described as "non-burning" in the table were evaluated using planographic printing plates which had not been subjected to the heat treatment and the items described as "burning" were evaluated using planographic printing plates which had been subjected to the heat treatment.

### [Printing]

The obtained planographic printing plates (before and after the burning) were continuously printed using a printer LITHRONE (manufactured by KOMORI Corporation). As the ink, a tokunen black ink (manufactured by TOYO INK CO., LTD.) which contains calcium carbonate, as a model of low-grade material was used. At this time, by visually observing how many sheets could be printed while maintaining a sufficient ink density, the printing durability was evaluated. As the number of sheets was larger, the printing durability was evaluated to be excellent. The results are listed in Table 1.

In addition, the printing durability was evaluated under the same conditions as described above except that the development was performed while the electric conductivity was managed using PS PROCESSOR XP-940R in place of PS PROCESSOR LP940H. Therefore, it was found that the results were not changed from the case of using PS PROCESSOR LP940H in all examples and comparative example.

### <Evaluation of chemical resistance>

Printing was performed in the same manner as in the evaluation of the printing durability. At this time, every time 5,000 sheets were printed, a step of reciprocally wiping the plate surface five times with a PS sponge containing a cleaner (MC-E, manufactured by Fujifilm Corporation) was performed, and the chemical resistance was evaluated. The printing durability at this time was evaluated as 4 in a case where the number of printed sheets was 95% to 100%, evaluated as 3 in a case where the number of printed sheets was 80% or greater and less than 95%, evaluated as 2 in a case where the number of printed sheets was 60% or greater and less than 80%, and evaluated as 1 in a case where the number of printed sheets was less than 60%. Even in a case where the step of wiping the plate surface with a cleaner was performed, as the change in the printing durability index was smaller, the chemical resistance was evaluated to be excellent. The results are listed in Table 1.

### <Evaluation of UV ink printing durability>

The obtained planographic printing plates (before and after burning) were continuously printed using a printer diamond 1F-2 (manufactured by Mitsubishi Heavy Industries, Ltd.). As the ink, T & K BESTCUREBFWRO black ink was used. At this time, by visually observing how many sheets could be printed while maintaining a sufficient ink density, the printing durability was evaluated. As the number of sheets was larger, the printing durability was evaluated to be excellent. The results are listed in Table 1.

**[Table 1]**

| | Phenol compound containing phenolic hydroxyl group and substituent represented by -CH₂OR in molecule and having molecular weight of 200 to 2000 | | Polymer having urea bond and/or urethane bond in main chain | Phenol resin | Underlayer | Printing durability (number of printed sheets) | | UV ink printing durability | Chemical resistance | | Image forming properties (a/b) |
|---|---|---|---|---|---|---|---|---|---|---|---|
| | Structure | Content (% by mass) | Structure | Addition amount (% by mass) | Coating amount | Non-burning | Burning | Non-burning | Non-burning | | |
| | | | | | | (10000 sheets) | (10000 sheets) | (10000 sheets) | (10000 sheets) | Evaluation results | |
| Comparative Example 1 | - | 0 | PU-1 | 0 | 1.0 | 12 | 6 | 6 | 6 | 1 | 3 |
| Example 1 | C-1 | 10 | PU-1 | 0 | 1.1 | 12 | 13 | 7 | 8 | 2 | 3.5 |
| Example 2 | C-1 | 30 | PU-1 | 0 | 1.2 | 12 | 15 | 8 | 10 | 3 | 4 |
| Example 3 | C-1 | 50 | PU-1 | 0 | 1.4 | 12 | 16 | 10 | 12 | 4 | 4.5 |
| Example 4 | C-2 | 30 | PU-1 | 0 | 1.2 | 12 | 16 | 9 | 10 | 3 | 4 |
| Example 5 | C-3 | 30 | PU-1 | 0 | 1.2 | 12 | 13 | 7 | 8 | 2 | 3 |
| Example 6 | C-4 | 30 | PU-1 | 0 | 1.2 | 12 | 14 | 8 | 8 | 2 | 3 |
| Example 7 | C-5 | 30 | PU-1 | 0 | 1.2 | 12 | 13 | 7 | 8 | 2 | 3 |
| Example 8 | C-6 | 30 | PU-1 | 0 | 1.2 | 12 | 14 | 8 | 10 | 3 | 4 |
| Example 9 | C-7 | 30 | PU-1 | 0 | 1.2 | 12 | 13 | 6 | 8 | 2 | 3 |
| Example 10 | C-8 | 30 | PU-1 | 0 | 1.2 | 12 | 13 | 7 | 8 | 2 | 3 |
| Example 11 | C-9 | 30 | PU-1 | 0 | 1.2 | 12 | 16 | 10 | 10 | 3 | 4 |
| Example 12 | C-1 | 30 | PU-1 | 10 | 1.3 | 12 | 17 | 8 | 10 | 3 | 4 |
| Example 13 | C-1 | 30 | PU-2 | 0 | 1.2 | 11 | 15 | 7 | 10 | 3 | 4 |
| Example 14 | C-1 | 30 | PU-3 | 0 | 1.2 | 11 | 15 | 7 | 10 | 3 | 2.5 |
| Example 15 | C-1 | 30 | PU-4 | 0 | 1.2 | 11 | 15 | 8 | 12 | 4 | 6 |
| Example 16 | C-1 | 30 | PU-5 | 0 | 1.2 | 11 | 13 | 6 | 10 | 3 | 3.5 |
| Comparative Example 2 | C-1 | 30 | CP-1 | 0 | 1.2 | 8 | 6 | 4 | 8 | 4 | 4 |
| Comparative Example 3 | - | 0 | CP-1 | 0 | 1.2 | 8 | 5 | 3 | 6 | 2 | 4 |
| Comparative Example 4 | - | 0 | PU-2 | 0 | 1.0 | 11 | 8 | 6 | 8 | 2 | 4 |
| Comparative Example 5 | - | 0 | PU-3 | 0 | 1.0 | 11 | 8 | 6 | 8 | 2 | 2 |
| Comparative Example 6 | - | 0 | PU-4 | 0 | 1.0 | 11 | 8 | 6 | 10 | 3 | 4 |
| Comparative Example 7 | - | 0 | PU-5 | 0 | 1.0 | 11 | 8 | 5 | 8 | 2 | 3 |

As evident from the results listed in Table 1, in a case where the positive type planographic printing plate precursor according to the present disclosure was used, it was understood that the printing durability of the planographic printing plate before and after the burning treatment was improved, and the UV ink printing durability and the cleaner resistance (chemical resistance) of the planographic printing plate obtained by using the printing plate precursor which had not been subjected to the burning treatment and the image forming properties of the positive type planographic printing plate precursor were excellent. Further, it was understood that the image forming properties of the positive type planographic printing plate precursor and the printing durability after the burning treatment were further improved in a case where the phenol resin was contained.

### (Comparative Examples 8 to 14 and Examples 17 to 32)

### <Preparation of support>

Supports were prepared in the same manner as in Example 1.

### <Formation of undercoat layer>

Supports A having an undercoat layer were prepared in the same manner as in Example 1.

### <Formation of image recording layer>

After each of the obtained supports A was coated with a coating solution composition (IX) having the following composition using a wire bar, the resulting product was dried in a drying oven at 140°C for 50 seconds, thereby obtaining a positive type planographic printing plate precursor having the coating amount listed in Table 2.

### [Coating solution composition (IX)]

- m,p-Cresol novolac (m/p ratio = 6/4, weight-average molecular weight of 5,000): 0.474 parts
- Polymer having any one or both of urea bond and urethane bond in main chain, listed in Table 2: 2.37 parts
- Phenol compound containing phenolic hydroxyl group and substituent represented by -CH₂OR in molecule and having molecular weight of 200 to 2000, listed in Table 2: the amount listed in Table 2
- Infrared absorbent (above IR coloring agent (1)): 0.155 parts
- 2-Methoxy-4-(N-phenylamino)benzenediazonium hexafluorophosphate: 0.03 parts
- Tetrahydrophthalic anhydride: 0.19 parts
- Product obtained by replacing a counter ion of ethyl violet with 6-hydroxy-β-naphthalenesulfonic acid: 0.11 parts
- Fluorine-based surfactant (MEGAFAC F-780, manufactured by Dainippon Ink and Chemicals): 0.07 parts
- p-Toluenesulfonic acid: 0.008 parts
- Bis-p-hydroxyphenyl sulfone: 0.13 parts
- 3,3'-Dimyristyl thiodipropionate : 0.04 parts
- Lauryl stearate: 0.02 parts
- N,N-dimethylacetamide: 13 parts
- Methyl ethyl ketone: 24 parts
- 1-Methoxy-2-propanol: 11 parts

The image forming properties, the printing durability, the chemical resistance, and the UV ink printing durability were evaluated using the planographic printing plates having a single layer structure (not a two-layer structure) prepared in the above-described manner according to the same method as in Example 1.

The evaluation results are listed in Table 2.

**[Table 2]**

| | Phenol compound containing phenolic hydroxyl group and substituent represented by -CH₂OR in molecule and having molecular weight of 200 to 2000 | | Polymer having urea bond and/or urethane bond in main chain | Phenol resin | Underlayer | Printing durability (number of printed sheets) | | UV ink printing durability | Chemical resistance | |
|---|---|---|---|---|---|---|---|---|---|---|
| | Structure | Content (% by mass) | Structure | Addition amount (% by mass) | Coating amount | Non-burning | Burning | Non-burning | Non-burning | |
| | | | | | | (10000 sheets) | (10000 sheets) | (10000 sheets) | (10000 sheets) | Evaluation results |
| Comparative Example 8 | - | 0 | PU-1 | 0 | 1.0 | 11 | 6 | 6 | 6 | 1 |
| Example 17 | C-1 | 10 | PU-1 | 0 | 1.1 | 11 | 13 | 7 | 8 | 2 |
| Example 18 | C-1 | 30 | PU-1 | 0 | 1.2 | 11 | 15 | 8 | 9 | 3 |
| Example 19 | C-1 | 50 | PU-1 | 0 | 1.4 | 11 | 16 | 10 | 10 | 3 |
| Example 20 | C-2 | 30 | PU-1 | 0 | 1.2 | 11 | 16 | 9 | 8 | 2 |
| Example 21 | C-3 | 30 | PU-1 | 0 | 1.2 | 11 | 13 | 7 | 7 | 2 |
| Example 22 | C-4 | 30 | PU-1 | 0 | 1.2 | 11 | 14 | 8 | 7 | 2 |
| Example 23 | C-5 | 30 | PU-1 | 0 | 1.2 | 11 | 13 | 7 | 7 | 2 |
| Example 24 | C-6 | 30 | PU-1 | 0 | 1.2 | 11 | 14 | 8 | 8 | 2 |
| Example 25 | C-7 | 30 | PU-1 | 0 | 1.2 | 11 | 13 | 6 | 7 | 2 |
| Example 26 | C-8 | 30 | PU-1 | 0 | 1.2 | 11 | 13 | 7 | 7 | 2 |
| Example 27 | Resol 1 | 30 | PU-1 | 0 | 1.2 | 11 | 16 | 10 | 9 | 3 |
| Example 28 | C-1 | 30 | PU-1 | 10 | 1.3 | 11 | 17 | 8 | 9 | 3 |
| Example 29 | C-1 | 30 | PU-2 | 0 | 1.2 | 10 | 15 | 7 | 9 | 3 |
| Example 30 | C-1 | 30 | PU-3 | 0 | 1.2 | 10 | 15 | 7 | 9 | 3 |
| Example 31 | C-1 | 30 | PU-4 | 0 | 1.2 | 10 | 15 | 8 | 10 | 3 |
| Example 32 | C-1 | 30 | PU-5 | 0 | 1.2 | 10 | 13 | 6 | 9 | 3 |
| Comparative Example 9 | C-1 | 30 | CP-1 | 0 | 1.2 | 7 | 6 | 4 | 7 | 3 |
| Comparative Example 10 | - | 0 | CP-1 | 0 | 1.2 | 7 | 5 | 3 | 6 | 3 |
| Comparative Example 11 | - | 0 | PU-2 | 0 | 1.0 | 10 | 8 | 6 | 7 | 2 |
| Comparative Example 12 | - | 0 | PU-3 | 0 | 1.0 | 10 | 8 | 6 | 7 | 2 |
| Comparative Example 13 | - | 0 | PU-4 | 0 | 1.0 | 10 | 8 | 6 | 9 | 3 |
| Comparative Example 14 | - | 0 | PU-5 | 0 | 1.0 | 10 | 8 | 5 | 8 | 3 |

As evident from the results in Table 2, it was understood that the printing durability of the planographic printing plate before and after the burning treatment was improved, and the UV ink printing durability and the cleaner resistance (chemical resistance) of the planographic printing plate obtained by using a printing plate precursor which was not subjected to the burning treatment were excellent, in a case where the positive type planographic printing plate precursor according to the present disclosure was used.

## Claims

1. A positive type planographic printing plate precursor, comprising:
a support; and
an image recording layer provided on the support,
wherein the image recording layer comprises: a phenol compound comprising a phenolic hydroxyl group and a substituent A represented by -CH₂OR in a molecule thereof, and having a molecular weight of from 200 to 2,000; a polymer comprising at least one selected from the group consisting of a urea bond and a urethane bond in a main chain thereof; and an infrared absorbent; and
wherein R represents a hydrogen atom, an alkyl group, or an acyl group, and in a case in which a plurality of the substituents A are present, a plurality of R's may be the same as or different from each other.

2. The positive type planographic printing plate precursor according to claim 1, wherein the phenol compound comprises at least one selected from the group consisting of: a phenol compound comprising three or more substituents A in which R represents a hydrogen atom in one molecule thereof; and a phenol compound comprising six or more substituents A in which R represents an alkyl group in one molecule thereof.

3. The positive type planographic printing plate precursor according to claim 1 or 2, wherein the phenol compound comprises at least one selected from the group consisting of: a phenol compound comprising six or more substituents A in which R represents a hydrogen atom, in one molecule thereof; and a phenol compound comprising six or more substituents A in which R represents an alkyl group, in one molecule thereof.

4. The positive type planographic printing plate precursor according to any one of claims 1 to 3, wherein R in the substituent A of the phenol compound represents a hydrogen atom.

5. The positive type planographic printing plate precursor according to any one of claims 1 to 4, wherein a content of the phenol compound is from 10% by mass to 30% by mass with respect to a total mass of the polymer.

6. The positive type planographic printing plate precursor according to any one of claims 1 to 5, wherein the polymer comprises a urea bond in a main chain thereof.

7. The positive type planographic printing plate precursor according to any one of claims 1 to 6, wherein the image recording layer further comprises a phenol resin having a weight-average molecular weight of larger than 2,000.

8. The positive type planographic printing plate precursor according to any one of claims 1 to 7, wherein the polymer further comprises an acid group.

9. The positive type planographic printing plate precursor according to claim 8 wherein the acid group comprises at least one selected from the group consisting of a phenolic hydroxyl group, a sulfonamide group, an active imide group, and a carboxylic acid group.

10. The positive type planographic printing plate precursor according to any one of claims 8 or 9 , wherein:
the polymer comprises at least one selected from the group consisting of a phenolic hydroxyl group and a sulfonamide group in the main chain thereof.

11. The positive type planographic printing plate precursor according to any one of claims 1 to 10, wherein:
the image recording layer comprises a multilayer structure comprising at least two layers of an underlayer and an upper layer; and
at least one of the underlayer and the upper layer comprises the phenol compound, the polymer, and the infrared absorbent.

12. The positive type planographic printing plate precursor according to claim 11, wherein the underlayer comprises the phenol compound, the polymer, and the infrared absorbent.

13. A method of producing a planographic printing plate, comprising, in the following order:
subjecting the positive type planographic printing plate precursor according to any one of claims 1 to 12 to image-wise light exposure; and
subjecting the positive type planographic printing plate precursor after the light exposure to development using an alkali aqueous solution having a pH of 8.5 to 13.5.

14. The method of producing a planographic printing plate according to claim 13, further comprising, after the development, a heat treatment step of heating the positive type planographic printing plate precursor at 150°C to 350°C.

## Patentansprüche

1. Positiver Flachdruckplattenvorläufer, umfassend:
einen Träger; und
eine Bildaufzeichnungsschicht, die auf dem Träger vorgesehen ist,
wobei die Bildaufzeichnungsschicht umfasst: eine Phenolverbindung, die eine phenolische Hydroxylgruppe und einen Substituenten A, der für -CH₂OR steht, in einem Molekül davon umfasst und ein Molekulargewicht von 200 bis 2.000 aufweist; ein Polymer, das mindestens eine, die ausgewählt ist aus der Gruppe, bestehend aus einer Harnstoffbindung und einer Urethanbindung, in einer Hauptkette davon umfasst; und ein Infrarotabsorptionsmittel; und
worin R für ein Wasserstoffatom, eine Alkylgruppe oder eine Acylgruppe steht, und für den Fall, dass eine Vielzahl von Substituenten A vorhanden ist, eine Vielzahl von R gleich oder verschieden voneinander sein kann.

2. Positiver Flachdruckplattenvorläufer gemäß Anspruch 1, wobei die Phenolverbindung mindestens eine umfasst, die ausgewählt ist aus der Gruppe, bestehend aus:
einer Phenolverbindung, die drei oder mehr Substituenten A, worin R für ein Wasserstoffatom steht, in einem Molekül davon umfasst; und
einer Phenolverbindung, die sechs oder mehr Substituenten A, worin R für eine Alkylgruppe steht, in einem Molekül davon umfasst.

3. Positiver Flachdruckplattenvorläufer gemäß Anspruch 1 oder 2, wobei die Phenolverbindung mindestens eine umfasst, die ausgewählt ist aus der Gruppe, bestehend aus:
einer Phenolverbindung, die sechs oder mehr Substituenten A, worin R für ein Wasserstoffatom steht, in einem Molekül davon umfasst; und
einer Phenolverbindung, die sechs oder mehr Substituenten A, worin R für eine Alkylgruppe steht, in einem Molekül davon umfasst.

4. Positiver Flachdruckplattenvorläufer gemäß einem der Ansprüche 1 bis 3, worin R in dem Substituenten A der Phenolverbindung für ein Wasserstoffatom steht.

5. Positiver Flachdruckplattenvorläufer gemäß einem der Ansprüche 1 bis 4, wobei ein Gehalt an der Phenolverbindung 10 Massen-% bis 30 Massen-%, bezogen auf die Gesamtmasse des Polymers, beträgt.

6. Positiver Flachdruckplattenvorläufer gemäß einem der Ansprüche 1 bis 5, wobei das Polymer eine Harnstoffbindung in einer Hauptkette davon umfasst.

7. Positiver Flachdruckplattenvorläufer gemäß einem der Ansprüche 1 bis 6, wobei die Bildaufzeichnungsschicht ferner ein Phenolharz mit einem gewichtsgemittelten Molekulargewicht von mehr als 2.000 umfasst.

8. Positiver Flachdruckplattenvorläufer gemäß einem der Ansprüche 1 bis 7, wobei das Polymer ferner eine Säuregruppe umfasst.

9. Positiver Flachdruckplattenvorläufer gemäß Anspruch 8, wobei die Säuregruppe mindestens eine umfasst, die ausgewählt ist aus der Gruppe, bestehend aus einer phenolischen Hydroxylgruppe, einer Sulfonamidgruppe, einer aktiven Imidgruppe und einer Carbonsäuregruppe.

10. Positiver Flachdruckplattenvorläufer gemäß einem der Ansprüche 8 oder 9, wobei:
das Polymer mindestens eine, die ausgewählt ist aus der Gruppe, bestehend aus einer phenolischen Hydroxylgruppe und einer Sulfonamidgruppe, in der Hauptkette davon umfasst.

11. Positiver Flachdruckplattenvorläufer gemäß einem der Ansprüche 1 bis 10, wobei:
die Bildaufzeichnungsschicht eine mehrschichtige Struktur mit mindestens zwei Schichten aus einer unteren Schicht und einer oberen Schicht umfasst; und
mindestens eine von der unteren Schicht und der oberen Schicht die Phenolverbindung, das Polymer und das Infrarotabsorptionsmittel enthält.

12. Positiver Flachdruckplattenvorläufer gemäß Anspruch 11, wobei die untere Schicht die Phenolverbindung, das Polymer und das Infrarotabsorptionsmittel umfasst.

13. Verfahren zur Herstellung einer Flachdruckplatte, umfassend, in der folgenden Reihenfolge:
Bildweises Belichten des positiven Flachdruckplattenvorläufers gemäß einem der Ansprüche 1 bis 12; und
Entwickeln des positiven Flachdruckplattenvorläufers nach dem Belichten unter Verwendung einer wässrigen Alkalilösung mit einem pH-Wert von 8,5 bis 13,5.

14. Verfahren zur Herstellung einer Flachdruckplatte gemäß Anspruch 13, ferner umfassend, nach dem Entwickeln, einen Wärmebehandlungsschritt, bei dem der positive Flachdruckplattenvorläufer bei 150°C bis 350°C erwärmt wird.

## Revendications

1. Précurseur de plaque d'impression planographique de type positif, comprenant :
un support ; et
une couche d'enregistrement d'image prévue sur le support,
dans lequel la couche d'enregistrement d'image comprend : un composé phénol comprenant un groupe hydroxyle phénolique et un substituant A représenté par -CH₂OR dans une molécule de celui-ci, et présentant un poids moléculaire de 200 à 2 000; un polymère comprenant au moins une sélectionnée dans le groupe consistant en une liaison urée et une liaison uréthane dans une chaîne principale de celui-ci ; et un absorbant infrarouge ; et
dans lequel R représente un atome d'hydrogène, un groupe alkyle, ou un groupe acyle, et dans un cas où une pluralité des substituants A sont présents, une pluralité de R peuvent être identiques ou différents les uns des autres.

2. Précurseur de plaque d'impression planographique de type positif selon la revendication 1, dans lequel le composé phénol comprend au moins un sélectionné dans le groupe consistant en : un composé phénol comprenant trois substituants A ou plus dans lesquels R représente un atome d'hydrogène dans une molécule de celui-ci, et un composé phénol comprenant six substituants A ou plus dans lesquels R représente un groupe alkyle dans une molécule de celui-ci.

3. Précurseur de plaque d'impression planographique de type positif selon la revendication 1 ou 2, dans lequel le composé phénol comprend au moins un sélectionné dans le groupe consistant en : un composé phénol comprenant six substituants A ou plus dans lesquels R représente un atome d'hydrogène, dans une molécule de celui-ci ; et un composé phénol comprenant six substituants A ou plus dans lesquels R représente un groupe alkyle, dans une molécule de celui-ci.

4. Précurseur de plaque d'impression planographique de type positif selon l'une quelconque des revendications 1 à 3, dans lequel R dans le substituant A du composé phénol représente un atome d'hydrogène.

5. Précurseur de plaque d'impression planographique de type positif selon l'une quelconque des revendications 1 à 4, dans lequel une teneur en composé phénol est de 10 % en masse à 30 % en masse par rapport à une masse totale du polymère.

6. Précurseur de plaque d'impression planographique de type positif selon l'une quelconque des revendications 1 à 5, dans lequel le polymère comprend une liaison urée dans une chaîne principale de celui-ci.

7. Précurseur de plaque d'impression planographique de type positif selon l'une quelconque des revendications 1 à 6, dans lequel la couche d'enregistrement d'image comprend en outre une résine phénolique présentant un poids moléculaire moyen en poids de plus de 2 000.

8. Précurseur de plaque d'impression planographique de type positif selon l'une quelconque des revendications 1 à 7, dans lequel le polymère comprend en outre un groupe acide.

9. Précurseur de plaque d'impression planographique de type positif selon la revendication 8, dans lequel le groupe acide comprend au moins un sélectionné dans le groupe consistant en un groupe hydroxyle phénolique, un groupe sulfonamide, un groupe imide actif, et un groupe acide carboxylique.

10. Précurseur de plaque d'impression planographique de type positif selon l'une quelconque des revendications 8 ou 9, dans lequel :
le polymère comprend au moins un sélectionné dans le groupe consistant en un groupe hydroxyle phénolique et un groupe sulfonamide dans la chaîne principale de celui-ci.

11. Précurseur de plaque d'impression planographique de type positif selon l'une quelconque des revendications 1 à 10, dans lequel :
la couche d'enregistrement d'image comprend une structure multicouche comprenant au moins deux couches d'une sous-couche et d'une couche supérieure ; et
au moins une parmi la sous-couche et la couche supérieure comprend le composé phénol, le polymère, et l'absorbant infrarouge.

12. Précurseur de plaque d'impression planographique de type positif selon la revendication 11, dans lequel la sous-couche comprend le composé phénol, le polymère, et l'absorbant infrarouge.

13. Procédé de production d'une plaque d'impression planographique, comprenant, dans l'ordre suivant, les étapes consistant à :
soumettre le précurseur de plaque d'impression planographique de type positif selon l'une quelconque des revendications 1 à 12 à une exposition lumineuse sous forme d'image ; et
soumettre le précurseur de plaque d'impression planographique de type positif après l'exposition lumineuse à un développement utilisant une solution aqueuse alcaline présentant un pH de 8,5 à 13,5.

14. Procédé de production d'une plaque d'impression planographique selon la revendication 13, comprenant en outre, après le développement, une étape de traitement thermique consistant à chauffer le précurseur de plaque d'impression planographique de type positif entre 150 °C et 350 °C.
